# EUROPÄISCHE PATENTSCHRIFT

(11) **EP 3 697 712 B1**
(45) Veröffentlichungstag und Bekanntmachung des Hinweises auf die Patenterteilung: **07.06.2023**
(21) Anmeldenummer: 18795951.5
(22) Anmeldetag: 16.10.2018
(51) Int. Cl.: B66B 5/00

(54) **VERFAHREN ZUR ÜBERWACHUNG EINER AUFZUGSKABINE**
METHOD FOR MONITORING A LIFT CAR
PROCÉDÉ DE SURVEILLANCE D'UNE CABINE D'ASCENSEUR

(30) Priorität: 17.10.2017 AT 508782017
(43) Veröffentlichungstag der Anmeldung: 26.08.2020
(73) Patentinhaber: View Promotion GmbH, 5211 Friedburg (AT)
(72) Erfinder: SCHOBER, Johannes, 5205 Strasswalchen (AT); SCHULER, Andreas Hannes, 4040 Linz (AT); KRAUSS, Oliver, 4232 Hagenberg (AT); WILFING, Daniel, 2201 Seyring (AT)
(74) Vertreter: KLIMENT & HENHAPEL
(86) Internationale Anmeldenummer: PCT/EP2018/078279
(87) Internationale Veröffentlichungsnummer: WO 2019/076917

(56) Entgegenhaltungen:
- JP-A- H1 179 620
- JP-A- 2000 026 037
- JP-A- 2003 112 878
- JP-A- 2013 056 754

## Beschreibung

### GEBIET DER ERFINDUNG

Die Erfindung betrifft ein Verfahren zur Überwachung einer Aufzugskabine mittels zumindest eines optischen Sensors, wobei der zumindest eine optische Sensor Bilddaten in einem Überwachungsbereich der Aufzugskabine erfasst, wobei die erfassten Bilddaten über eine erste Datenverbindung an eine in der Aufzugskabine angeordnete Auswerteeinrichtung übermittelt werden, wobei in der Auswerteeinrichtung die erfassten Bilddaten mit zumindest einem Referenzbild des Überwachungsbereichs verglichen werden.

### STAND DER TECHNIK

Wie im Allgemeinen bekannt ist, dient eine Aufzugsanlage zum Transport von Objekten, nämlich Personen und/oder Gegenständen, zwischen unterschiedlichen Stockwerken eines Gebäudes und ist dem technischen Gebiet der Unstetigförderer zuzurechnen. Zu diesem Zweck kann eine Aufzugsanlage eine oder mehrere Aufzugskabinen umfassen, in deren Innenraum die Passagiere bzw. Gegenstände befördert werden. In der Regel weisen Aufzugskabinen eine Aufzugstüre auf, die zum Ein- oder Ausstieg einer Person oder zum be- oder entladen eines Gegenstands geöffnet ist und während der Bewegung zwischen den Stockwerken geschlossen ist. In einem Gebäude können auch mehrere Aufzugsanlagen vorgesehen sein, die unterschiedliche Einsatzgebiete aufweisen.

Die Notwendigkeit zur Überwachung des Inneren einer Aufzugskabine besteht aus Gründen der Sicherheit der Passagiere, da eine Aufzugskabine bei geschlossener Aufzugstüre ein abgeschlossenes System bildet, welches von außen nicht einsehbar ist. Tritt nämlich ein Ereignis ein, welches nicht dem normalen Betrieb zuzurechnen ist, beispielsweise ein Krankheitsfall einer in der Aufzugskabine befindlichen Person oder ein auffälliges Verhalten einer in der Aufzugskabine befindlichen Person, so kann dieses Ereignis durch die Überwachung der Aufzugskabine mittels zumindest eines optischen Sensors detektiert werden und entsprechende Schritte gesetzt werden. In der Vergangenheit wurden zu diesem Zweck beispielsweise mit einem Überwachungsraum verbundenen Kameras in der Aufzugskabine angebracht, die die erfassten Bilder an einen Überwachungsraum zur Überwachung durch einen Aufzugswart übermittelten.

Um die Überwachung des Inneren der Aufzugskabine mittels zumindest eines optischen Sensors zu automatisieren, ist es entscheidend, dass einerseits in den Überwachungsbereich gelangende Objekte sicher erkannt werden, also der Zugang von Objekten erfasst wird, und dass andererseits aus dem Überwachungsbereich entfernte Objekte nicht weiter überwacht werden müssen, die Überwachung nach dem Abgang eines Objekts also beendet wird.

Beispielsweise offenbart die WO 2016/085795 A1 ein System zur Überwachung des Inneren einer Aufzugskabine oder eines Einstiegsbereichs vor der Aufzugskabine, wobei zumindest ein Körperteil von im Überwachungsbereich befindlichen Personen mittels eines optischen Sensors verfolgt wird, um anhand von vordefinierten Parametern zu entscheiden, ob in der Aufzugskabine ein Notfall eingetreten ist.

Ein Nachteil des Stands der Technik ist darin zu sehen, dass die Stabilität des vorgeschlagenen Überwachungssystems sinkt, desto mehr Objekte sich in der Aufzugskabine befinden. Wird ein erstes Objekt nämlich von einem zweiten Objekt verdeckt, befindet sich also das zweite Objekt in der Sichtlinie zwischen dem optischen Sensor und dem ersten Objekt, so ist keine Erfassung von Körperteilen des ersten Objekts mehr möglich, sodass ein Notfall unter Umständen nicht vom System erfasst wird.

Des Weiteren offenbart die JP H11 79620 A eine Vorrichtung zur Überwachung einer Aufzugskabine, umfassend eine Videokamera sowie eine Infrarot-Schranke innerhalb der Aufzugskabine und eine Infrarot-Schranke außerhalb der Aufzugskabine, wobei die Infrarot-Schranken mit einer Kontrolleinheit verbunden sind. Sobald ein Fahrgast beim Einsteigen in die Aufzugskabine alle Infrarot-Schranken durchschreitet, beginnt die Videokamera aufzuzeichnen. Wenn der Fahrgast die Aufzugskabine verlässt und dabei abermals alle Infrarot-Schranken passiert, beendet die Videokamera die Aufzeichnung.

### AUFGABE DER ERFINDUNG

Es ist daher eine Aufgabe der Erfindung die Nachteile des Stands der Technik zu überwinden und ein Verfahren zur

Überwachung einer Aufzugskabine vorzuschlagen, welches auch bei einer größeren Anzahl an im Überwachungsbereich befindlichen Objekten stabil funktioniert. Eine weitere Aufgabe besteht darin, die Anzahl an fehlerhaften Auslösungen von Alarmierungsprozeduren zu reduzieren.

### DARSTELLUNG DER ERFINDUNG

Diese Aufgabe wird in einer erfindungsgemäßen Verfahren zur Überwachung einer Aufzugskabine mittels zumindest eines optischen Sensors dadurch gelöst, dass der zumindest eine optische Sensor Bilddaten in einem Überwachungsbereich der Aufzugskabine erfasst, wobei die erfassten Bilddaten über eine erste Datenverbindung an eine in der Aufzugskabine angeordnete Auswerteeinrichtung übermittelt werden, wobei in der Auswerteeinrichtung die erfassten Bilddaten mit zumindest einem Referenzbild des Überwachungsbereichs verglichen werden, um folgende Schritte durchzuführen:
- Erfassen des Zugangs von Objekten in den Überwachungsbereich sowie zumindest eines Wiedererkennungsmerkmals für jedes erfasste Objekt, wobei ein Datenobjekt für jedes erfasste Objekt in einem Datenspeicher aktiviert wird und das zumindest eine Wiedererkennungsmerkmal im Datenobjekt gespeichert wird;
- Detektieren des Abgangs von Objekten aus dem Überwachungsbereich, wobei das dem abgegangenen Objekt zugeordnete Datenobjekt deaktiviert wird;
wobei
- ein Verdeckungs-Eintrag im Datenobjekt eines Objekts aktiviert wird, wenn das Objekt nicht mehr von dem zumindest einen optischen Sensor erfasst wird, ohne dass der Abgang des Objekts detektiert wurde;
- der Verdeckungs-Eintrag im Datenobjekt eines Objekts deaktiviert wird, wenn das Objekt von dem zumindest einen optischen Sensor wiedererfasst wird;
   wobei eine Alarmierungsprozedur ausgelöst wird, wenn
- ein Datenobjekt in einer vordefinierten Zeitdauer nach seiner Aktivierung nicht deaktiviert wurde und das Datenobjekt keinen aktiven Verdeckungs-Eintrag aufweist.

In der Folge wird im erfindungsgemäßen Zusammenhang unter dem Begriff "aktivieren" eines Datenobjekts verstanden, dass die Auswerteeinrichtung ein aktives Datenobjekt, also ein Datenobjekt dessen zugeordnetes Objekt sich potentiell im Überwachungsbereich befindet und dabei überwacht wird, von einem deaktivierten Datenobjekt, also einem Datenobjekt dessen zugeordnetes Objekt sich nicht mehr im Überwachungsbereich befindet und nicht mehr überwacht wird, unterscheidet. Ob das Datenobjekt beim Aktivieren tatsächlich neu generiert wird oder ein bereits vorhandenes Datenobjekt lediglich einen positiven Aktivitäts-Eintrag erhält ist dabei nicht entscheidend. Gleichermaßen verhält es sich mit der "Aktivierung" der diversen Einträge der Datenobjekte, auch diese können entweder neu generiert werden oder nur in einen aktiven Status versetzt werden.

Ebenso wird im erfindungsgemäßen Zusammenhang unter dem Begriff "deaktivieren" eines Datenobjekts verstanden, dass die Auswerteeinrichtung dieses Datenobjekt als inaktiv verarbeitet, also das zugeordnete Objekt als nicht im Überwachungsbereich befindlich behandelt und entsprechend nicht mehr überwacht. Auch hierbei kann entweder das Datenobjekt zur Deaktivierung in der Auswerteeinrichtung gelöscht werden oder das Datenobjekt wird beibehalten, jedoch mit einem negativen Aktivitäts-Eintrag versehen. Gleichermaßen verhält es sich mit der "Deaktivierung" der diversen Einträge der Datenobjekte, auch diese können entweder gelöscht werden oder nur in einen inaktiven Status versetzt werden.

Das dem erfindungsgemäßen Überwachungsverfahren zugrunde liegende Prinzip der Objekterkennung basiert auf einem Vergleich der von dem zumindest einen optischen Sensor erfassten Bilddaten mit zumindest einem Referenzbild. In der Regel zeigt das Referenzbild das Innere der Aufzugskabine bzw. große Teile davon, sowie - je nach Anordnung des zumindest einen optischen Sensors - gegebenenfalls auch einen Vorbereich der Aufzugskabine, sofern die Aufzugstüre auf dem Referenzbild geöffnet ist. Grundsätzlich ist es zur genauen Überwachung vorteilhaft, wenn eine Vielzahl an Referenzbildern dem Vergleich zugrunde liegt, beispielsweise bei verschiedenen Lichtverhältnissen und/oder für verschiedene Stockwerke. In der Regel sind die Referenzbilder so gewählt, dass sich keine Objekte im Überwachungsbereich befinden, die später detektiert werden sollen. In anderen Worten zeigt das zumindest eine Referenzbild vorzugsweise eine leere Aufzugskabine bzw. einen leeren Vorbereich.

In einer bevorzugten Ausführungsvariante der Erfindung ist vorgesehen, dass zumindest zwei Referenzbilder vorgesehen sind, wobei zumindest ein erstes Referenzbild den Überwachungsbereich bei geöffneter Aufzugstür der Aufzugskabine und zumindest ein zweites Referenzbild den Überwachungsbereich bei geschlossener Aufzugstür der Aufzugskabine zeigt. Dadurch wird einerseits ermöglicht, dass die Auswerteeinrichtung allein aufgrund des Vergleichs der Bilddaten detektieren kann, ob die Aufzugstür geschlossen oder geöffnet ist, andererseits kann so auch der Vorbereich des Aufzugs erfasst werden - gegebenenfalls um darin befindliche Objekte von der Erfassung auszunehmen. Ein weiterer Vorteil besteht darin, dass die durch die geöffnete Aufzugstür geänderten Lichtverhältnisse berücksichtigt werden können.

Wird der Zugang eines Objekts mittels des Bildvergleichs festgestellt, so wird ein dem erfassten Objekt zugeordnetes Datenobjekt aktiviert. Der Zugang wird vorteilhafter Weise insbesondere dann stattfinden, wenn die Aufzugstüre geöffnet ist. Verdeckt eingetretene Objekte können jedoch auch bei geschlossener Aufzugstüre erstmals erfasst werden.

Um das Objekt möglichst eindeutig im Überwachungsbereich verfolgen zu können, wird zumindest ein Wiedererkennungsmerkmal des Objekts erfasst und im Datenobjekt des jeweiligen erfassten Objekts gespeichert. Vorzugsweise werden mehrere Wiedererkennungsmerkmale gespeichert und/oder werden die Wiedererkennungsmerkmale laufend aktualisiert, da bei einer Bewegung wie einer Drehung des Objekts andere Wiedererkennungsmerkmale sichtbar werden bzw. die ursprünglich gespeicherten Wiedererkennungsmerkmale unter Umständen nicht mehr sichtbar sind.

Sobald ein Abgang des Objekts aus dem Überwachungsbereich detektiert wird, also insbesondere dann, wenn ein Objekt die Aufzugskabine bzw. den Überwachungsbereich durch die geöffnete Aufzugstür verlässt, wird das dem Objekt zugeordnete Datenobjekt deaktiviert und somit die Überwachung dieses Objekts beendet.

Grundsätzlich wäre es nun denkbar, dass die Auswerteeinrichtung für jedes Datenobjekt einen Aktivierungszeitpunkt festhält und jedes Mal eine Alarmierungsprozedur auslöst, wenn kein Abgang des Objekts detektiert wurde und eine vordefinierte Zeitdauer seit der Aktivierung des Datenobjekts vergangen ist, beispielsweise ein Timer abgelaufen ist. Diese Prozedur würde jedoch zu einer gehäuften Anzahl an fehlerhaften Auslösungen führen, insbesondere wenn sich überdurchschnittlich viele Objekte in der Aufzugskabine befinden, da ein Objekt verdeckt sein könnte und sein Abgang nicht vom zumindest einen optischen Sensor detektiert wurde. Die Alarmierungsprozedur umfasst im einfachsten Fall das Absetzen einer Meldung an eine zuständige Meldestelle, etwa eine Notrufzentrale oder eine Wartungszentrale, wobei auch das Ausgeben einer Information in der Aufzugskabine denkbar ist.

Um nun bei einer Mehrzahl von Objekten im Überwachungsbereich die Stabilität des Systems zu gewährleisten und gleichzeitig die Anzahl an fehlerhaften Auslösungen einer Alarmierungsprozedur zu verringern, wird ein Verdeckungs-Eintrag im Datenobjekt eines verdeckten Objekts aktiviert, wenn das Objekt nicht mehr von dem zumindest einen optischen Sensor detektiert wird, ohne dass der Abgang des Objekts, also das reguläre Erfassen des Austritts aus der Aufzugskabine, detektiert wurde. Die Auswerteeinrichtung kann daher aufgrund der zusätzlichen Information, dass sich ein Objekt mit hoher Wahrscheinlichkeit im Überwachungsbereich befindet, jedoch nicht von dem zumindest einen Sensor erfasst wird, verbesserte Entscheidungen treffen, wie in der Folge näher erläutert.

Gleichzeitig kann durch die kontinuierliche Überwachung des Überwachungsbereichs bei einer Positionsänderung der Objekte innerhalb des Überwachungsbereichs, also beispielsweise wenn ein zweites, die Erfassung eines ersten Objekts verhindernde, Objekt seine Position relativ zum zumindest einen optischen Sensor verändert, auch das erste Objekt, dessen zugeordnetes Datenobjekt einen aktiven Verdeckungs-Eintrag aufweist, wieder erfasst werden. In diesem Fall wird der Verdeckungs-Eintrag deaktiviert, da das Objekt nunmehr wieder vom Sensor erfasst wird. Für die Wiedererkennung ist unter anderem das gespeicherte zumindest eine Wiedererkennungsmerkmal maßgeblich. Selbiges gilt entsprechend auch für die Wiedererfassung mehrerer verdeckter Objekte.

Da der Auswerteeinrichtung also mit dem Verdeckungs-Eintrag eine weitere Information zur Grundlage der Entscheidung, ob eine Alarmierungsprozedur ausgelöst werden soll oder nicht, vorliegt, ist vorgesehen, dass die Alarmierungsprozedur nur dann ausgelöst wird, wenn ein Objekt nicht verdeckt ist und die vordefinierte Zeitdauer abgelaufen ist. Somit werden einerseits verdeckte Objekte die den Überwachungsbereich verlassen, ohne dass ihr Abgang explizit detektiert wurde, quasi aussortiert, da diese keine Alarmierungsprozedur mehr auslösen. Gleichzeitig wird auch die Dauer für die Auslösung einer Alarmierungsprozedur für solche Objekte reduziert, die über eine gewisse Zeitdauer verdeckt waren, da diese nicht neu erfasst werden, sondern lediglich bei der Wiedererfassung der Verdeckungs-Eintrag deaktiviert wird. Entsprechend beginnt die vordefinierte Zeitdauer nicht bei der Wiedererfassung neu zu laufen, sondern wird im Hintergrund weiter erfasst. So kann es beispielsweise sein, dass ein erfasstes Objekt in der Aufzugskabine zurückgelassen wird, jedoch zumindest zeitweise verdeckt wurde, also einen aktiven Verdeckungs-Eintrag aufweist. Wird das Objekt nach dem Ablauf der vordefinierten Zeitdauer wiedererfasst - wird also der Verdeckungs-Eintrag deaktiviert, so wird umgehend die Alarmierungsprozedur ausgelöst. Wird das Objekt wiederfasst, bevor die vordefinierte Zeitdauer abgelaufen ist, so wird die Alarmierungsprozedur erst ausgelöst, wenn die vordefinierte Zeitdauer abgelaufen ist und das Objekt zu diesem Zeitpunkt noch immer keinen aktiven Verdeckungs-Eintrag aufweist.

Die ausgelöste Alarmierungsprozedur kann vorzugsweise zumindest einen der folgenden Schritte aufweisen, vorzugsweise werden mehrere Schritte hintereinander durchgeführt:
- Herstellen einer Kommunikationsverbindung zwischen der Auswerteeinrichtung oder einem mit der Auswerteeinrichtung kommunikationsverbundenen Server und einer Notrufzentrale über ein Kommunikationsnetz;
Dabei kann es sich bei der Notrufzentrale beispielsweise um eine Rufnotstelle von Einsatzkräften, wie Polizei, Feuerwehr oder Rettung, handeln oder aber um einen Sicherheitsdienst der zur Überwachung der Aufzugsanlage vorgesehen ist. Eine solche Alarmierungsprozedur ist dabei insbesondere bei Ereignissen wie Ohnmacht, Feuer oder tätlichen Angriffen sinnvoll.
- Herstellen einer Kommunikationsverbindung zwischen der Auswerteeinrichtung oder einem mit der Auswerteeinrichtung kommunikationsverbundenen Server und einer Wartungszentrale über ein Kommunikationsnetz;
Eine Wartungszentrale kann insbesondere dann verständigt werden, wenn ein technischer Defekt in der Aufzugskabine detektiert wurde, beispielsweise im Hinblick auf die Beleuchtung der Aufzugskabine oder die Öffnung der Aufzugstür oder eine starke Verschmutzung der Aufzugskabine bzw. Vandalismus.
- Übermittlung von Informationen an die Auswerteeinrichtung; So können beispielsweise Informationen auf einer in der Aufzugskabine angeordneten Anzeigeeinrichtung angezeigt werden oder über einen Lautsprecher ausgegeben werden. Es ist auch denkbar, dass die Auswerteeinrichtung durch die übermittelten Informationen getestet oder aktualisiert wird.
- Herstellen einer Kommunikationsverbindung zwischen der Auswerteeinrichtung oder einem mit der Auswerteeinrichtung kommunikationsverbundenen Server und einer Smartphone-App über ein Kommunikationsnetz.

Beispielsweise können so in der Nähe der Aufzugskabine befindliche Sicherheitskräfte oder Wartungskräfte über die App alarmiert werden und zur entsprechenden Aufzugskabine geleitet werden.

In einer Ausführungsvariante der Erfindung ist vorgesehen, dass in der Auswerteeinrichtung folgender Schritt durchgeführt wird:
- Identifizieren ob es sich bei einem erfassten Objekt um einen Gegenstand oder um eine Person handelt, wobei im Datenobjekt ein entsprechender Identifikations-Eintrag aktiviert wird.

Beispielsweise kann die Identifizierung der erfassten Objekte mittels Gesichtserkennung erfolgen, sodass jedes Objekt, bei welchem ein Gesicht erkannt wird, als Person identifiziert wird. Genauso wäre es denkbar, dass verschiedene Bewegungsmuster zur Unterscheidung, ob es sich um einen Gegenstand oder um eine Person handelt, herangezogen werden können. Zusätzlich kann ein Objekt über einen Vergleich mit einer Objektdatenbank als Gegenstand oder Person identifiziert werden.

In einer weiteren Ausführungsvariante der Erfindung ist vorgesehen, dass nach der Identifizierung eines Gegenstands und/oder einer Person eine Klassifizierung in verschiedene Gegenstands-Klassen oder Personen-Klassen erfolgt, wobei die Klassifizierung im Identifikations-Eintrag gespeichert wird. So kann beispielsweise aufgrund der Gesichtserkennung und/oder der Erkennung von biometrischen Daten identifiziert werden, ob es sich bei einer Person um einen Mann, eine Frau oder um ein Kind handelt. Zusätzlich ist es auch möglich aufgrund der Bewegungsmuster Personen mit eingeschränkter Mobilität, beispielsweise Rollstuhlfahrer oder Personen mit Gehhilfe, zu identifizieren. Im Hinblick auf Objekte kann die Klassifizierung etwa mittels einer hinterlegten Objektdatenbank erfolgen, um beispielsweise Reisegepäck wie Koffer, Taschen und/oder Rucksäcke als solche zu klassifizieren.

Aufgrund der zusätzlichen Informationen des Identifikations-Eintrags ist es in einer bevorzugten Ausführungsvariante möglich, dass in Abhängigkeit des Identifikations-Eintrags unterschiedliche Alarmierungsprozeduren ausgelöst werden und/oder dass die vordefinierte Zeitdauer für jeden Identifikations-Eintrag unterschiedlich definiert ist. Der Identifikations-Eintrag ermöglicht es also, sowohl die Alarmierungsprozedur als auch die vordefinierten Zeitdauern an das identifizierte bzw. klassifizierte Objekt anzupassen. So kann beispielsweise bei einem Kind, das ohne Begleitperson erfasst wird, zuerst der Sicherheitsdienst alarmiert werden bzw. kann die Zeitdauer bis zur Auslösung der Alarmierungsprozedur erheblich verkürzt werden. Gleichfalls ist es auch denkbar, dass beispielsweise auf Flughäfen, alleine erfasste Gegenstände, insbesondere Gepäckstücke, nur eine stark verkürzte Zeitdauer aufweisen bzw. sofort die Einsatzkräfte verständigt und gegebenenfalls eine Durchsage ausgelöst wird.

Um auf außergewöhnliche Ereignisse entsprechend reagieren zu können, ohne dass der Ablauf der vordefinierten Zeitdauer abgewartet wird, ist in einer weiteren Ausführungsvariante der Erfindung vorgesehen, dass die vordefinierte Zeitdauer unterbrochen wird und die Alarmierungsprozedur ausgelöst wird, wenn zusätzlich zur Detektion der Anwesenheit von zumindest einer Person ohne aktiven Verdeckungs-Eintrag eine der folgenden Betriebssituationen detektiert wird:
- Veränderung der Lichtverhältnisse im Überwachungsbereich bei geschlossener Aufzugstüre der Aufzugskabine;
- Keine Öffnung der Aufzugstüre der Aufzugskabine über eine vordefinierte Maximaldauer.

In modernen Aufzugskabinen wird in der Regel das Licht im Inneren der Aufzugskabine gedimmt oder ausgeschaltet, wenn die Aufzugskabine über einen längeren Zeitraum inaktiv war. Befindet sich daher bei geschlossener Aufzugstür eine Person innerhalb des Überwachungsbereichs und das Licht wird schwächer, so muss davon ausgegangen werden, dass die Person nicht bei Bewusstsein ist und die Alarmierungsprozedur umgehend eingeleitet werden muss.

Gleichfalls kann aufgrund eines Nichtöffnens der Aufzugstüre über eine Maximaldauer, beispielsweise die reine Fahrtdauer von unterstem zum obersten Stockwerk, auf eine Funktionsstörung der Aufzugskabine hindeuten, wenn sich noch zumindest eine Person im Aufzug befindet. Entsprechend können eingeschlossene Personen durch mittels der ausgelösten Alarmierungsprozedur verständigte Hilfskräfte befreit werden.

Um die Überwachung und Verfolgung von Objekten im Überwachungsbereich zu verbessern, ist in einer weiteren bevorzugten Ausführungsvariante der Erfindung vorgesehen, dass der zumindest eine optische Sensor eine Tiefenkamera umfasst und in der Auswerteeinrichtung folgender Schritt durchgeführt wird:
- Erfassen von Positionsdaten der erfassten Objekte zur Bestimmung einer Position der Objekte innerhalb des Überwachungsbereichs, wobei zumindest die aktuellen Positionsdaten im Datenobjekt gespeichert werden;
wobei die Positionsdaten zur Verifizierung der Aktivierung und/oder der Deaktivierung der Verdeckungs-Einträge verwendet werden.

Mittels der über die Tiefenkamera erfassten Positionsdaten lässt sich beispielsweise ein dreidimensionales Modell der Aufzugskabine und der darin befindlichen Objekte generieren, was sowohl die Verfolgung von Objekten als auch die Erkennung von verdeckten Objekten vereinfacht. So kann aufgrund der erfassten Positionsdaten eines Objekts mit aktivem Verdeckungs-Eintrag die Wahrscheinlichkeit einer Wiedererfassung erhöht werden, wenn das verdeckende Objekt seine Position ändert während das verdeckte Objekt im Bereich der zuletzt erfassten Position bleibt. Gleichermaßen kann die korrekte Identifizierung der Verdeckung eines Objekts verbessert werden, wenn sich die Position eines ersten Objekts derart verändert, dass die Position eines zweiten, verdeckenden Objekts auf eine Verdeckung des ersten Objekts schließen lässt.

Vorzugsweise umfasst der zumindest eine optische Sensor eine, vorzugsweise steuerbare und/oder digital auswertbare, Videokamera und eine Tiefenkamera, wobei die Tiefenkamera einen Infrarot Laser Projektor und einen monochromatischen CMOS Sensor umfasst.

Wie bereits zuvor erwähnt, kann die Information, ob die Aufzugstüre geschlossen oder geöffnet ist, die Überwachung und den Bildvergleich verbessern, insbesondere im Hinblick auf die Lichtverhältnisse in der Aufzugskabine, auf einen eventuell miterfassten Vorbereich der Aufzugskabine bzw. auf die Erfassung eines regulären Zu- oder Abgangs eines Objekts. Die Information über den Zustand der Aufzugstüre kann einerseits direkt von der Auswerteeinrichtung erfasst werden, beispielsweise durch mehrere Referenzbilder in denen die Aufzugstüre zumindest einmal geöffnet und zumindest einmal geschlossen ist. Es ist aber auch denkbar, dass die Auswerteeinrichtung mit einem entsprechenden Sensor in der Aufzugskabine verbunden ist oder mit einer Aufzugssteuereinrichtung verbunden ist und somit die Information indirekt erfasst. Daher ist in einer weiteren bevorzugten Ausführungsvariante der Erfindung vorgesehen, dass die Auswerteeinrichtung direkt oder indirekt erfasst, ob eine Aufzugstür der Aufzugskabine geöffnet oder geschlossen ist, wobei eine Detektion des Abgangs von Objekten nur dann erfolgt, wenn die Aufzugstür der Aufzugskabine geöffnet ist. Während ein regulärer Abgang eines Objekts ausschließlich bei geöffneter Aufzugstüre stattfinden kann, kann der Zugang grundsätzlich auch während der Fahrt erfasst werden, nämlich dann, wenn das Objekt verdeckt in den Überwachungsbereich gelangt ist und erst während der Fahrt vom Sensor erfasst wird. Grundsätzlich ist es jedoch vorteilhaft wenn der der Aufzugstüre zugeordnete Abschnitt des Überwachungsbereichs bei geöffneter Aufzugstüre auch eine hohe Sensibilität für die Erfassung von Zugängen aufweist.

Um das zumindest eine Referenzbild, vorzugsweise die Mehrzahl an Referenzbildern, möglichst genau auf die lokalen Verhältnisse am Einsatzort der Aufzugskabine abzustimmen, ist in einer besonders bevorzugten Ausführungsvariante vorgesehen, dass das zumindest eine Referenzbild im Rahmen zumindest einer Kalibrierungsfahrt der Aufzugskabine von dem zumindest einen optischen Sensor erfasst wird und/oder dass das zumindest eine Referenzbild aus einer Datenbank importiert wird. Besonders vorteilhaft ist es dabei, wenn in jedem Stockwerk zumindest ein Referenzbild bei geöffneter Aufzugstüre erfasst wird, um die Vorbereiche der Aufzugskabine sowie die Lichtverhältnisse mitzuerfassen. Weiter verbessert werden können die Referenzbilder dadurch, dass mehrere Kalibrierungsfahrten zu unterschiedlichen Tageszeiten durchgeführt werden, wodurch auch die Änderung der Lichtverhältnisse über den Tag hinweg einfließen können. Es ist auch denkbar, dass für mehrere baugleiche Aufzugskabinen eine Datenbank mit Referenzbildern angelegt wird und diese nicht für jedes Objekt mittels einer oder mehrerer Kalibrierungsfahrt(en) erfasst werden müssen.

Die Festlegung der vordefinierten Zeitdauer nach deren Ablauf eine Alarmierungsprozedur ausgelöst wird, sofern das Datenobjekt keinen aktiven Verdeckungs-Eintrag aufweist, kann im einfachsten Fall eine - etwa vom Betreiber der Aufzugsanlage - vorgegebene Zeitdauer sein, etwa 3 Minuten, 5 Minuten, 10 Minuten oder 15 Minuten. Während eine kürzere Zeit eine schnellere Reaktionszeit auf ein sicherheitsrelevantes Ereignis bedingt, kann sich gleichzeitig die Anzahl der Fehldetektionen erhöhen, wenn die Zeitdauer nicht an die Gegebenheiten des Einsatzortes der Aufzugskabine angepasst wird. Entsprechend ist in einer ersten bevorzugten Ausführungsvariante der Erfindung vorgesehen, dass die vordefinierte Zeitdauer jener Zeit entspricht, die die Aufzugskabine für eine Fahrt von einem untersten bis zu einem obersten Stockwerk benötigt, vorzugsweise zuzüglich eines Aufschlagwertes für einen Aufenthalt der Aufzugskabine in einem Stockwerk oder in mehreren Stockwerken. Somit ist die vordefinierte Zeitdauer abhängig von einer maximalen Fahrzeit der Aufzugskabine. Da grundsätzlich die Aufzugskabine in jedem Stockwerk halten kann, ist es vorteilhaft, wenn ein Aufschlagswert für den Aufenthalt in einem Stockwerk bzw. in mehreren oder allen Stockwerken eingerechnet wird. Der Aufschlagswert kann entweder einen Maximalwert darstellen, was einem Halt in allen Stockwerken entspricht, oder einen Durchschnittswert in Abhängigkeit des Fahrverhaltens der Aufzugskabine. Eine derartige Definition der vordefinierten Zeitdauer kann unabhängig davon erfolgen, ob die Auswerteeinrichtung Informationen über das aktuelle Stockwerk von einer Liftsteuerung oder einem Positionssensor erhält.

Gemäß einer zweiten bevorzugten Ausführungsvariante der Erfindung ist vorgesehen, dass die Auswerteeinrichtung direkt oder indirekt erfasst in welchem Stockwerk sich die Aufzugskabine befindet und die vordefinierte Zeitdauer jener Zeit entspricht, die zwischen der Erstellung des Datenobjekts und der zweiten Richtungsumkehr der Aufzugskabine vergeht oder die vordefinierte Zeitdauer jener Zeit entspricht, die zwischen der Erstellung des Datenobjekts und der Vorbeifahrt der Aufzugskabine an jenem Stockwerk vergeht, in welchem das Datenobjekt erstellt wurde. Direkte oder indirekte Erfassung bedeutet auch in diesem Zusammenhang, dass das Stockwerk entweder direkt über die Bildauswertung von der Auswerteeinrichtung erfasst wird oder dass die Auswerteeinrichtung mit einem Positionssensor oder einer Aufzugssteuerung verbunden ist. Wenn ein Objekt in der Aufwärtsbewegung der Aufzugskabine in die Aufzugskabine gelangt, eigentlich jedoch hinunterfahren will, so kommt es zur ersten Richtungsumkehr wenn die Aufwärtsbewegung beendet ist und zur zweiten Richtungsumkehr, wenn die Abwärtsbewegung beendet ist. Ist die Abwärtsbewegung beendet, so muss angenommen werden, dass das Objekt sein Zielstockwerk erreicht hat und die Aufzugskabine verlassen hätte sollen. Wenn ein Objekt in der Abwärtsbewegung zusteigt und tatsächlich hinunterfahren möchte, so kann angenommen werden, dass das Objekt bei einer neuerlichen Vorbeifahrt an dem Stockwerk in dem es erfasst wurde, nicht mehr in der Aufzugskabine sein sollte. Besonders vorteilhaft ist es dabei, wenn durch Zusammenwirken der Auswerteeinrichtung und der Aufzugssteuerung jedem Objekt ein Zielstockwerk zugeordnet werden kann.

Um die Algorithmen zur Erkennung einer Verdeckung und zur Auslösung einer Alarmierungsprozedur zu verbessern, ist in einer weiteren Ausführungsvariante der Erfindung vorgesehen, dass am Ende der Alarmierungsprozedur überprüft wird, ob ein die Auslösung der Alarmierungsprozedur rechtfertigendes Ereignis stattgefunden hat, wobei Parameterwerte die der Auslösung der Alarmierungsprozedur zu Grunde liegen gemeinsam mit dem Überprüfungsergebnis gespeichert werden, um zukünftige Fehldetektionen zu vermeiden. Die Überprüfung kann beispielsweise durch die Eingabe einer alarmierten Sicherheits- oder Einsatzkraft erfolgen, die bestätigt, ob sich tatsächlich eine bewusstlose Person oder ein zurückgelassener Gegenstand in der Aufzugskabine befunden haben. Aufgrund dieser Information lassen sich die Konfidenzintervalle der erfassten Parameter anpassen, um künftig bei ähnlichen Vergleichswerten entweder eher eine Alarmierungsprozedur auszulösen oder davon abzusehen. Vorteilhaft ist es dabei, wenn die Auswerteeinrichtung über zumindest ein erstes Kommunikationsnetzwerk mit zumindest einem Server kommuniziert, um die Konfidenzintervalle für mehrere Aufzüge anpassen zu können.

Um dafür Sorge zu tragen, dass Datenobjekte mit aktivem Verdeckungs-Eintrag, deren zugeordnete Objekte den Überwachungsbereich verlassen haben, ohne dass dies von dem zumindest einen optischen Sensor erfasst wurde, nicht für einen unbestimmten Zeitraum aktiviert bleiben, ist in einer weiteren besonders bevorzugten Ausführungsvariante der Erfindung vorgesehen, dass alle Datenobjekte deaktiviert werden, wenn kein Objekt im Überwachungsbereich erfasst wird und/oder dass ein Datenobjekt mit aktivem Verdeckungs-Eintrag nach Ablauf einer vordefinierten Maximaldauer deaktiviert wird. Im ersten Fall wird also eine leere Aufzugskabine detektiert, da sich keine Objekte im Überwachungsbereich befinden. Damit kann sich auch kein verdecktes Objekt mehr im Aufzug befinden, sodass alle noch aktiven Datenobjekte entsprechend deaktiviert werden. Im zweiten Fall, der auftreten kann, wenn die Aufzugskabine stark frequentiert wird, wird ein Datenobjekt mit aktivem Verdeckungs-Eintrag nach einer Maximaldauer, etwa nach 30 Minuten, deaktiviert, da einerseits eine so lang andauernde Nichterfassung unwahrscheinlich ist und andererseits bei einem Notfall eine der Personen wohl reagiert hätte, sodass ein verdeckter Abgang vermutet wird.

Um den Überwachungsbereich, in welchem Objekte erfasst und überwacht werden, genau an die Gegebenheiten der aktuellen Aufzugskabine anzupassen, ist in einer weiteren besonders bevorzugten Ausführungsvariante vorgesehen, dass anhand des zumindest einen Referenzbilds der Überwachungsbereich in Abhängigkeit eines Innenraums und/oder eines Vorbereichs der Aufzugskabine festgelegt wird. Somit kann die Wahrscheinlichkeit, dass ein Objekt erfasst wird, welches eigentlich fester Bestandteil der Aufzugskabine und/oder eines Vorbereichs der Aufzugskabine ist stark reduziert werden. Beispielsweise können somit Glaswände oder verspiegelte Wände der Aufzugskabine berücksichtigt werden. Gleichfalls ist es möglich, im Aufzug befindliche Objekte, beispielsweise Handläufe oder (Klapp)Sitze vom Überwachungsbereich auszunehmen. Ebenso ist es möglich, dass im Vorbereich der Aufzugskabine befindliche Gegenstände oder Objekte vom Überwachungsbereich ausgenommen werden

Als ein kompaktes und modulares System mittels welchem die eingangs erwähnten Aufgaben gelöst werden und mittels welchem Aufzugskabinen verschiedener Hersteller ausgerüstet bzw. nachgerüstet werden können, wird gemäß einem weiteren Aspekt der Erfindung eine Überwachungseinrichtung für eine Aufzugskabine vorgeschlagen, diese umfassend eine Auswerteeinrichtung und zumindest einen optischen Sensor zur Erfassung von Bilddaten, sowie vorzugsweise eine Kommunikationseinrichtung zur Kommunikation mit zumindest einem Server über ein erstes Kommunikationsnetzwerk, wobei die Auswerteeinrichtung eingerichtet ist, um ein erfindungsgemäßes Verfahren durchzuführen.

Die zuvor erwähnte Kommunikation mit einem Server ist jedoch unabhängig von der zuvor genannten Überprüfung vorteilhaft, beispielsweise um eine zweistufige Überprüfung vorzunehmen, ob ein detektiertes Ereignis für die konkrete Aufzugskabine eine Alarmierungsprozedur auslösen soll. In der Folge wird kurz auf ein derartiges Verfahren eingegangen, welches sich ohne weiteres mit dem gegenständlichen Verfahren kombinieren lässt. Das nachfolgend beschriebene Verfahren ist Gegenstand einer eigenständigen Anmeldung, welche vom selben Anmelder am selben Anmeldetag hinterlegt wurde.

Um eine einfache Anpassung des Überwachungsprozesses an das Einsatzgebiet bzw. den Einsatzort der Aufzugsanlage zu ermöglichen, ist in dem Verfahren zur Überwachung der Aufzugskabine vorgesehen, dass zur Identifizierung eines sicherheitsrelevanten Ereignisses in der Aufzugskabine folgende Schritte durchgeführt werden:
- Auswerten der erfassten Sensordaten und Identifizieren eines aktuellen Ereignisses in der Aufzugskabine mit zumindest einem in der Auswerteeinrichtung hinterlegten Algorithmus;
- Generieren einer dem aktuellen Ereignis zugeordneten Ereignis-Identifikations-Meldung;
- Vergleichen der Ereignis-Identifikations-Meldung mit einer der Aufzugskabine zugeordneten Ereignis-Datenbank, wobei das aktuelle Ereignis bei einer Übereinstimmung von Ereignis-Identifikations-Meldung und einem Eintrag der Ereignis-Datenbank als ein für die Aufzugskabine sicherheitsrelevantes Ereignis identifiziert wird;
- Auslösen einer Alarmierungsprozedur durch den zumindest einen Server, wenn ein sicherheitsrelevantes Ereignis identifiziert wurde.

Die Vereinfachung der Serverstruktur wird einerseits dadurch erreicht, dass die Auswertung der Sensordaten lokal in der Auswerteeinrichtung erfolgt und nicht zentral auf dem zumindest einen Server. Somit kann die zu übertragene Datenmenge erheblich reduziert werden.

Die Anpassbarkeit des Überwachungsverfahrens an verschiedene Einsatzorte wird durch ein zweistufiges Verfahren erreicht, wobei in einem ersten Schritt der Algorithmus der Auswerteeinrichtung anhand der Sensordaten Ereignisse erkennt, die potentiell sicherheitsrelevant sind, unabhängig davon, welches Ereignis für den jeweiligen Einsatzort der Aufzugsanlage tatsächlich sicherheitsrelevant ist und für welches eine Alarmierungsprozedur ausgelöst werden muss. Beispielsweise kann es sich bei derartigen Ereignissen um eine der in nachfolgender nichtabschließender Aufzählung erwähnten handeln: ohnmächtige Person, zurückgelassenes Objekt, Brand, auffälliges Verhalten einer Person, starke Verschmutzung in der Aufzugskabine, keine Öffnung der Aufzugstüre, Ausfall der Aufzugsbeleuchtung, starke Verschmutzung der Aufzugskabine, Vandalismus in der Aufzugskabine.

Die Sensordaten, die über die erste Datenverbindung an die Auswerteeinrichtung übermittelt werden, können einen einzelnen Messwert eines Sensors umfassen oder können mehrere mittels eines Sensors messbare Messwerte umfassen. Entsprechendes gilt auch für zwei, drei oder mehr Sensoren. Es ist auch denkbar dass Rohdaten, etwa Bilddaten oder Audiodaten, als Sensordaten an die Auswerteeinrichtung übermittelt werden, wobei die Auswerteeinrichtung die Rohdaten mittels eines Auswertungsalgorithmus auswertet. Der Auswertungsalgorithmus kann beispielsweise einen Vergleich von Bilddaten mit zumindest einem Referenzbild vorsehen oder einen Vergleich von Audiodaten mit einer Audiodatenbank.

An diesem Punkt findet sich die Schnittstelle zum gegenständlichen Verfahren, da der Vergleich der von dem zumindest einen optischen Sensor erfassten Bilddaten mit dem zumindest einen Referenzbild sowie die übrigen erfindungsgemäßen Verfahrensschritte als Teil des Auswertungsalgorithmus durchgeführt werden können. Entsprechend umfasst der zumindest eine Sensor des vorstehend definierten Verfahrens den erfindungsgemäß vorgesehenen zumindest eine optische Sensor, sowie gegebenenfalls weitere Sensoren.

Die ausgewerteten Sensordaten können einem Identifikationsalgorithmus mittels eines sogenannten Feature-Vektors, welcher verschiedene Einträge für die erfassten und gegebenenfalls vorausgewerteten Sensordaten enthält, beispielsweise Temperatur, Anzahl der Objekte in der Aufzugskabine, Rauch, zugeführt werden, wobei auch die Generierung eines Feature-Vektors als Auswertung angesehen wird. Für den Identifikationsalgorithmus kommen dabei unterschiedliche Konzepte in Frage: Es kann sich beispielsweise um eine Machine-Learning Methode, etwa ein neuronales Netzwerk oder eine Support-Vektor Machine, handeln, welche sich selbst anhand von Referenzdaten laufend verbessert, ohne dass konkrete Schwellenwerte vorgegeben werden müssen. Andererseits ist eine Entscheidungsbaum Methode (Decision tree) denkbar, die maschinenlernend auf Referenzdaten basiert. Stattdessen kann der Identifikationsalgorithmus auch regelbasiert mittels eines Entscheidungsbaums oder einer Entscheidungsmatrix aufgebaut sein, um Ereignisse auch durch das Erreichen, Überschreiten oder Unterschreiten von konkreten, vordefinierten Schwellenwerten zu erkennen. Auch ist eine State-Machine basierter Identifikationsalgorithmus denkbar, gemäß welchem eine Änderung der ausgewerteten Sensordaten ein Ereignis identifiziert.

Mittels des Identifikationsalgorithmus ist es demnach möglich aufgrund der erfassten Sensordaten ein aktuelles Ereignis in der Aufzugskabine zu erfassen und zu identifizieren, welches Ereignis eingetreten ist. Vorzugsweise sind die identifizierbaren Ereignisse abschließend definiert, können jedoch über den zumindest einen Server aktualisiert bzw. erweitert werden. Entsprechend wird eine Ereignis-Identifikations-Meldung generiert, durch welche die Information über das Eintreten des aktuellen Ereignisses in eine nächste Ebene weitergeleitet wird.

In dieser Ebene wird überprüft, ob das aktuelle Ereignis für die konkrete, überwachte Aufzugskabine tatsächlich ein sicherheitsrelevantes Ereignis darstellt, sodass eine Alarmierungsprozedur ausgelöst werden muss oder ob für den Einsatzort der Aufzugskabine das aktuelle Ereignis keine konkreten Maßnahmen erfordert. Beispielsweise kann ein zurückgelassener Gegenstand in einem sicherheitssensitiven Umfeld, etwa einem Flughafen, die Verständigung des Sicherheitsdienstes erfordern, während in einem Wohn- oder Bürogebäude keine Notwendigkeit dafür besteht.

Zu diesem Zweck ist eine der überwachten Aufzugskabine zugeordnete Ereignis-Datenbank vorgesehen, in welcher definiert ist, welches von dem zumindest einen Algorithmus identifizierte aktuelle Ereignis tatsächlich für die konkrete Aufzugskabine ein sicherheitsrelevantes Ereignis darstellt und daher die Auslösung einer Alarmierungsprozedur notwendig ist. Die Einträge der Ereignis-Datenbank fungieren in anderen Worten ausgedrückt als Filter, welcher für jede Aufzugskabine festlegt, welches aktuelle Ereignis eine Alarmierungsprozedur auslöst. Eine Alarmierungsprozedur umfasst im einfachsten Fall das Absetzen einer Meldung an eine zuständige Meldestelle, wobei auch das Ausgeben einer Information in der Aufzugskabine denkbar ist.

Unter dem Begriff sicherheitsrelevante Ereignisse sind im Kontext jene Ereignisse zu verstehen, welche eine Alarmierungsprozedur auslösen sollen. Es kann sich dabei auch um Ereignisse wie starke Verschmutzung oder Vandalismus handeln. Unter dem Begriff der Ereignis-Datenbank ist nicht nur eine Datenbank im engeren Sinne zu verstehen, vielmehr kann es sich dabei um eine Liste, eine Tabelle oder ein Daten-Set handeln, welche entsprechende Einträge aufweisen, die bei einem Vergleich mit der Ereignis-Identifikations-Meldung zumindest eine Ja/Nein Entscheidung erlauben, ob eine Alarmierungsprozedur ausgelöst werden soll. Dabei kann es sich bei dem Vergleich einerseits um eine Überprüfung handeln, ob die Ereignis-Datenbank überhaupt einen entsprechenden Eintrag für die Ereignis-Identifikations-Meldung aufweist oder andererseits um eine Überprüfung, ob ein der Ereignis-Identifikations-Meldung zugeordneter Eintrag der Ereignis-Datenbank die Auslösung einer Alarmierungsprozedur indiziert. Entsprechend findet ein Vergleich der generierten Ereignis-Identifikations-Meldung mit der Ereignis-Datenbank statt um sicherzustellen, dass nur dann die Alarmierungsprozedur ausgelöst wird, wenn dies für die konkrete Aufzugskabine vorgesehen ist.

Aufgrund des zweistufigen Verfahrens, also Erfassung eines aktuellen Ereignisses und Überprüfung ob es sich bei dem aktuellen Ereignis um ein für die Aufzugskabine sicherheitsrelevantes Ereignis handelt, kann dieselbe Auswerteeinheit mit dem implementierten zumindest einen Algorithmus in einer Vielzahl von in unterschiedlichen Einsatzbereichen bzw. an verschiedenen Einsatzorten befindlichen Aufzugskabinen eingesetzt werden, ohne dass der zumindest eine Algorithmus der Auswerteeinrichtung modifiziert werden muss, da die vom Einsatzbereich bzw. Einsatzort abhängigen sicherheitsrelevanten Ereignisse, welche eine Alarmierungsprozedur auslösen sollen, in der Ereignis-Datenbank in einfacher Art und Weise definiert werden können.

Im erfindungsgemäßen Kontext der Überwachung von verdeckten Objekten bedeutet dies, dass die erfindungsgemäß vorgesehene Auslösung der Alarmierungsprozedur die nach dem vorstehend beschriebenen Verfahren Schritte beinhaltet. Dadurch kann es aufgrund der Definition der Ereignis-Datenbank dazu kommen, dass die Auslösung der erfindungsgemäßen Alarmierungsprozedur im Rahmen des Vergleichs von Ereignis-Identifikations-Meldung und Ereignis-Datenbank unterbrochen wird.

Grundsätzlich ist es denkbar, dass die Ereignis-Datenbank ebenfalls in die Auswerteeinrichtung integriert ist und erst beim Auslösen der Alarmierungsprozedur die Kommunikation mit dem Server stattfindet.

In einer Ausführungsvariante des Verfahrens ist vorgesehen, dass die Ereignis-Identifikations-Meldung von der Auswerteeinrichtung an den zumindest einen Server übermittelt wird, die der Aufzugskabine zugeordnete Ereignis-Datenbank am zumindest einen Server hinterlegt ist und der Vergleich von Ereignis-Identifikations-Meldung und Ereignis-Datenbank auf dem zumindest einen Server durchgeführt wird. Dadurch wird einerseits das Volumen der übertragenen Daten zwischen Auswerteeinrichtung und dem zumindest einen Server reduziert, da lediglich die Ereignis-Identifikations-Meldung übermittelt wird. Andererseits ist die zentral auf dem zumindest einen Server abgespeicherte Ereignis-Datenbank besonders nutzerfreundlich adaptierbar, da kein direkter Zugang zur Auswerteeinrichtung notwendig ist. Gleichwohl kann somit in einfacher Art und Weise eine Schnittstelle zwischen dem Anbieter des Systems und den Nutzern des Systems geschaffen werden, welche einen nutzeroptimierten Zugang zum System bietet, um die Auslösung einer Alarmierungsprozedur an die Bedürfnisse der Nutzer anpassen zu können.

Eine weitere Ausführungsvariante sieht vor, dass die Ereignis-Identifikations-Meldung die der Identifikation des aktuellen Ereignisses zugrunde liegenden Sensordaten enthält. Durch die übermittelten Sensordaten kann die Funktion des zumindest einen Algorithmus der Auswerteeinrichtung überprüft werden und gegebenenfalls eine Anpassung der Konfidenzintervalle für eine spezifische Aufzugskabine durchgeführt werden. Es ist auch denkbar, dass die übermittelten Sensordaten mit entsprechenden Daten der Ereignis-Datenbank abgeglichen werden, um zu entscheiden, ob eine Alarmierungsprozedur ausgelöst wird oder nicht. Besonders vorteilhaft ist es dabei, wenn die mit der Ereignis-Identifikations-Meldung übermittelten Sensordaten auf dem zumindest einen Server gespeichert werden, um die Sensordaten, beispielsweise statistisch, auszuwerten und um künftige Fehldetektionen zu vermeiden.

Besonders vorteilhaft ist der Einsatz des Verfahrens für mehrere Aufzugskabinen einer Aufzugsanlage oder für mehrere Aufzugskabinen von unterschiedlichen Aufzugsanlagen. In diesem Fall fungiert der zumindest eine Server als zentrale Schnittstelle, über welche die Alarmierungsprozeduren verschiedener Aufzugskabinen zentral abgearbeitet werden können. Dadurch, dass die Ereignis-Datenbank auf dem zumindest einen Server hinterlegt ist, kann jeder mit dem zumindest einen Server kommunizierenden Auswerteeinrichtung einer Aufzugskabine eine eigene Ereignis-Datenbank zugeordnet sein. Gleichermaßen ist es auch möglich einer Gruppe von Aufzugskabinen, welche allesamt im selben Einsatzgebiet betrieben werden und daher dieselben Ereignisse als sicherheitsrelevant eingestuft werden, eine gemeinsame Ereignis-Datenbank zuzuweisen. Es versteht sich dabei von selbst, dass ein Datenkonstrukt auch mehrere Ereignis-Datenbanken für unterschiedliche Aufzugskabinen bzw. für unterschiedliche Gruppen enthalten kann. So kann beispielsweise ein Gebäudekomplex eine erste Gruppe an Aufzugskabinen aufweisen, für welche zurückgelassene Gegenstände sicherheitsrelevant sind (etwa Passagieraufzüge), und eine zweite Gruppe an Aufzugskabinen, etwa Personalaufzüge, für welche dieses Ereignis keine Rolle spielt. Daher ist in einer besonders bevorzugten Ausführungsvariante des Verfahrens vorgesehen, dass jeder Aufzugskabine eine Ereignis-Datenbank zugeordnet ist und/oder dass mehrere Aufzugskabinen zu einer Gruppe zusammengefasst sind und jeder Gruppe von Aufzugskabinen eine Ereignis-Datenbank zugeordnet ist.

Während es grundsätzlich denkbar ist, für jedes detektierte sicherheitsrelevante Ereignis dieselbe Alarmierungsprozedur auszulösen und durchzuführen, beispielsweise die Benachrichtigung eines Liftwartes, ist es besonders vorteilhaft, wenn für jedes sicherheitsrelevante Ereignis eine auf dieses abgestimmte Alarmierungsprozedur ausgelöst wird. Daher ist in einer weiteren Ausführungsvariante des Verfahrens vorgesehen, dass in der Ereignis-Datenbank für jedes sicherheitsrelevante Ereignis zumindest eine Alarmierungsprozedur hinterlegt ist. Es ist auch denkbar verschiedene Abläufe innerhalb einer Alarmierungsprozedur festzulegen, die mit unterschiedlicher Priorität abgearbeitet werden.

Um sicherzustellen, dass über die ausgelöste Alarmierungsprozedur Sicherheits-, Notfall- oder Einsatzkräfte an den Ort des sicherheitsrelevanten Ereignisses gelangen können, ist in einer weiteren bevorzugten Ausführungsvariante des Verfahrens vorgesehen, dass der Aufzugskabine zugeordnete Standortdaten auf dem zumindest einen Server hinterlegt sind und die Standortdaten im Rahmen der ausgelösten Alarmierungsprozedur übermittelt werden. Bei den Standortdaten kann es sich beispielsweise um eine Adresse, GPS Koordinaten und/oder einen Lageplan eines Gebäudes handeln.

Um verschiedene Ereignisse mittels des zumindest einen weiteren Sensors, in einfacher Art und Weise identifizieren zu können, ist in einer weiteren Ausführungsvariante des Verfahrens vorgesehen, dass der zumindest eine Sensor einen Rauchsensor und/oder einen Temperatursensor und/oder einen akustischen Sensor, insbesondere ein Mikrofon, und/oder einen Beschleunigungssensor und/oder einen Feuchtigkeitssensor und/oder einen Ultraschallsensor umfasst. Der Rauchsensor sowie der Temperatursensor können beispielsweise zur Branddetektion benützt werden, der akustische Sensor kann beispielsweise anormale Geräusche wie etwa Schreie erfassen, während mittels des Feuchtigkeitssensors beispielsweise ein Eindringen von Flüssigkeit detektierbar ist. Ultraschallsensoren können bei prekären Lichtverhältnissen beispielsweise zur Erfassung von Objekten beitragen.

Um im Rahmen der Alarmierungsprozedur mit in der Auszugskabine befindlichen Personen Kontakt aufnehmen zu können, ist in einer weiteren bevorzugten Ausführungsvariante des Verfahrens vorgesehen, dass die Aufzugskabine eine Anzeigeeinheit und/oder eine Audio-Übertragungseinheit aufweist und die Alarmierungsprozedur zumindest einen der folgenden Schritte umfasst:
- Herstellen einer Video Verbindung zwischen der Anzeigeeinheit und dem zumindest einen Server oder zwischen der Anzeigeeinheit und einer Notrufzentrale;
- Herstellen einer Audio Verbindung zwischen der Audio-Übertragungseinheit und dem zumindest einen Server oder zwischen der Audio-Übertragungseinheit und einer Notrufzentrale.

Es versteht sich dabei von selbst, dass auch die Herstellung einer Verbindung mit einer Wartungszentrale möglich ist. Auch ist es denkbar, dass die Kommunikation mit der Notrufzentrale bzw. der Wartungszentrale über den zumindest einen Server erfolgt.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung einer Aufzugskabine mit einer Überwachungseinrichtung;
- Fig. 2: eine Ausführungsform eines Systems mit mehreren Überwachungseinrichtungen;
- Fig. 3: eine schematische Übersicht eines Ablaufdiagramms, insbesondere Ausschnitt II;
- Fig. 3a: Ausschnitt I des Ablaufdiagramms gemäß Fig. 3;
- Fig. 3b: Ausschnitt III des Ablaufdiagramms gemäß Fig. 3.

### WEGE ZUR AUSFÜHRUNG DER ERFINDUNG

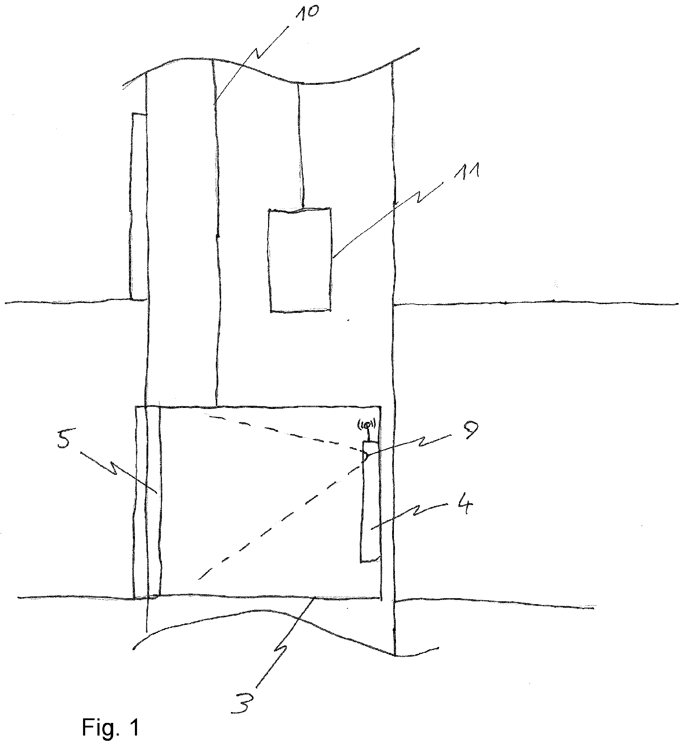

Fig. 1 zeigt eine Aufzugskabine 3 einer Aufzugsanlage, welche sich in einem Aufzugsschacht befindet. Die vertikale Bewegung der Aufzugskabine 3 erfolgt mittels eines mit einer Antriebseinheit verbundenen Tragseils 10, welches mit einem Gegengewicht 11 zusammenwirkt. Die Aufzugskabine 3 ist mittels einer Aufzugstüre 5 verschlossen, welche sich in zumindest zwei Stockwerken öffnen kann, um den Zu- bzw. Abgang von Objekten, insbesondere von Personen und Gegenständen, zu ermöglichen.

Im Innenraum der Aufzugskabine 3 ist eine Überwachungseinrichtung 4 angebracht, welche einen optischen Sensor 9 umfasst, mittels welchem die Aufzugskabine 3 überwacht werden kann.

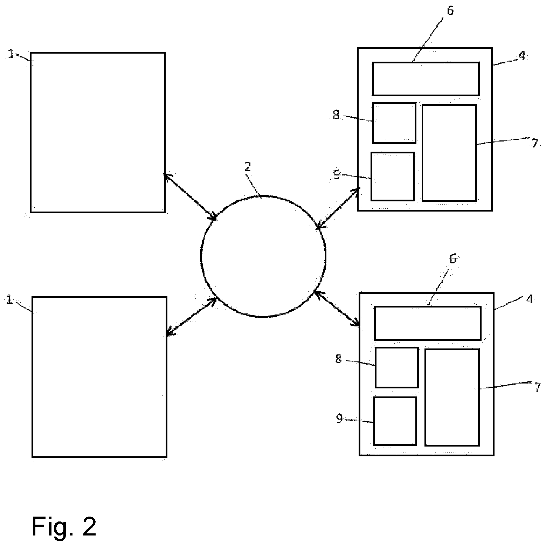

Fig. 2 zeigt ein System mit zwei Überwachungseinrichtungen 4, welche über ein Kommunikationsnetzwerk 2 mit zwei Servern 1 in Kommunikationsverbindung stehen. Dabei ist jede der Überwachungseinrichtungen 4 in einer unterschiedlichen Aufzugskabine 3 angeordnet. Bei dem Kommunikationsnetzwerk 2 auch durch eine oder mehrere der folgenden bekannten Netzwerklösungen dargestellt werden: Internet, Mobilfunknetz, einen Hub, Switch, Router, WLAN-Router, CAN-Controller oder mobile Lösungen wie GSM, GPRS, EDGE, UMTS, HSPA, LTE, WiMAX, LTE-Advanced bzw. eine 5G Verbindung oder andere Netzwerklösungen.

Die Überwachungseinrichtung 4 umfasst dabei im vorliegenden Ausführungsbeispiel den optischen Sensor 9 zur Erfassung von Bilddaten sowie einen weiteren optionalen Sensor 8, welcher Sensordaten erfasst. Bei dem weiteren Sensor 8 kann es sich beispielsweise um einen Rauchsensor und/oder einen Temperatursensor und/oder einen akustischen Sensor, insbesondere ein Mikrofon, und/oder einen Beschleunigungssensor und/oder einen Feuchtigkeitssensor und/oder einen Ultraschallsensor handeln. Je nachdem welches Ereignis in der Aufzugskabine 3 detektiert werden soll, kann ein einzelner Sensor 8,9 oder eine Kombination von zwei oder mehreren Sensoren 8,9 vorteilhaft sein.

Die Sensoren 8,9 sind über eine erste Datenverbindung mit einer Auswerteeinrichtung 6 verbunden, in welcher die Sensordaten ausgewertet werden. Insbesondere werden dabei die Bilddaten des optischen Sensors 9 mit zumindest einem Referenzbild verglichen, wie in der Folge ausführlich erläutert wird. Die erste Datenverbindung kann beispielsweise eine serielle Schnittstelle, wie USB, RS232 oder RS485 oder eine parallele Schnittstelle wie PCI oder IEEE 1284 sein. Auch ein CAN-Bus als Datenverbindung ist denkbar.

Bei der Auswerteeinrichtung 6 kann es sich beispielsweise um einen Mikrocomputer oder einen (industriellen) PC handeln, welcher einerseits Bilddaten empfangen kann und andererseits Datenobjekte samt zugehörigen Einträgen aktivieren, speichern und deaktivieren kann. Zusätzlich dazu weist die Auswerteeinrichtung 6 in der Regel zumindest einen Algorithmus auf, welcher laufend Wiedererkennungsmerkmale der erfassten Objekte erfasst und überprüft. Darüber hinaus kann die Auswerteeinrichtung 6 vorteilhafterweise Daten und Informationen über das Kommunikationsnetzwerk 2 an den Server 1 (oder die Server 1) übertragen und Informationen und Daten vom Server 1 empfangen. Alternativ dazu kann auch eine eigenständige Kommunikationseinrichtung vorgesehen sein.

Zusätzlich weist die Überwachungseinheit 4 eine Anzeigeeinrichtung 7 auf, über welche Informationen angezeigt werden können. Gleichfalls ist es auch denkbar, dass eine Videoübertragung mittels des optischen Sensors 9 und der Anzeigeeinrichtung 7 hergestellt wird. Die Anzeigeeinrichtung 7 ist elektronisch steuerbar und kann z.B. ein LCD, Plasma, FED, TFT, CRT, OLED, SED, Fallblattanzeige, Nixie-Röhre, Braunsche Röhre, Matrixanzeige (LED, OLED, VFD, Glühlampe), Videoprojektor (Eidophor, Röhren, LCD, DLP, LED, LCoS, Laser) sein, ist jedoch nicht auf diese Ausführungen beschränkt.

Um eine Audio Verbindung herzustellen kann auch eine nicht dargestellte Audioübertragungseinrichtung in die Überwachungseinrichtung 4 integriert sein, die ein Mikrofon und einen Lautsprecher beinhaltet. Sofern einer der Sensoren 8 als Mikrofon ausgebildet ist, kann dieses für die Audio Verbindung genutzt werden.

Anhand einer der Überwachungseinrichtungen 4 soll nun das erfindungsgemäße Verfahren zur Überwachung der Aufzugskabine 3 erläutert werden. Wenngleich der kompakte und modulare Aufbau der Überwachungseinrichtung 4 vorteilhaft ist, ist es für die Funktionsweise des Verfahrens nicht zwingend erforderlich alle funktionswesentlichen Elemente in einer Einheit zu verbauen. Vielmehr können die Sensoren 8,9 und die Auswerteeinrichtung 6 sowie gegebenenfalls die Anzeigeeinrichtung 7 und die Audioübertragungseinrichtung getrennt voneinander in der Aufzugskabine 3 verbaut sein.

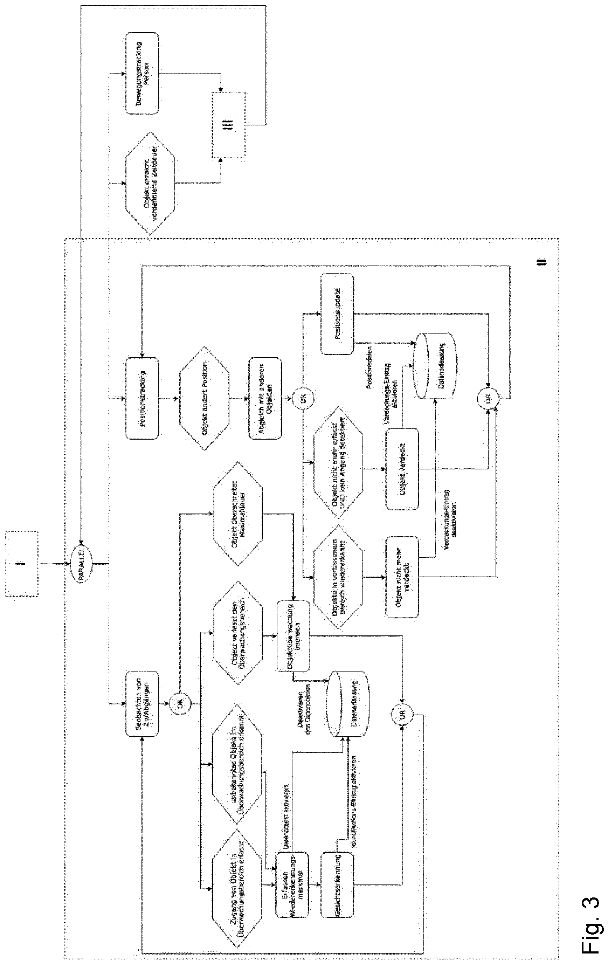

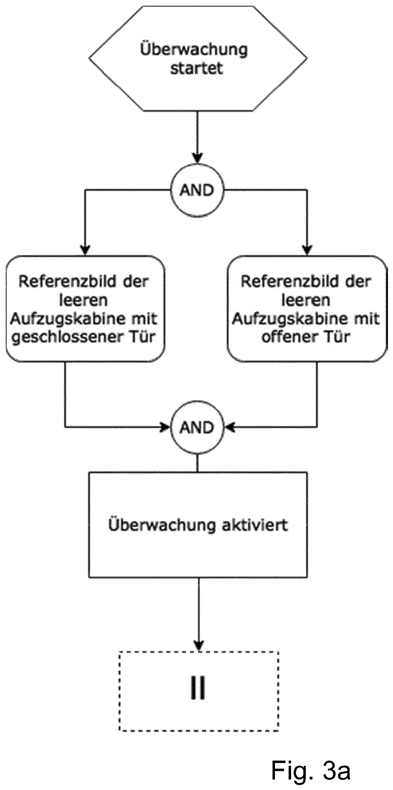

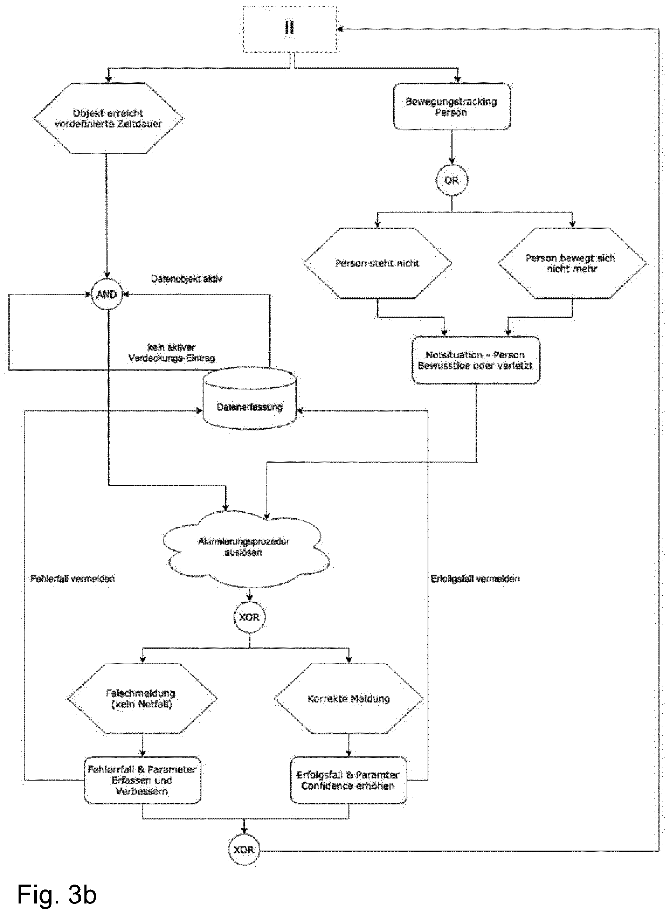

In den Figuren 3, 3a und 3b ist ein schematisches Ablaufdiagramm einer bevorzugten Ausführungsvariante des erfindungsgemäßen Verfahrens dargestellt, welches der Übersichtlichkeit halber in drei Ausschnitte unterteilt wurde. Aus Fig. 3 sind die Zusammenhänge der Ausschnitte I, II und III ersichtlich, ebenso wie die Abläufe von Ausschnitt II im Detail.

Die erste Phase des Überwachungsverfahrens stellt der in Fig. 3a dargestellte Abschnitt I dar, welcher jeweils beim Start der Überwachung durchgeführt wird. Der optische Sensor 9 erfasst laufend Bilddaten des Überwachungsbereichs des Innenraums der Aufzugkabine 3. Die Bilddaten werden in der Auswerteeinrichtung 6 zur Erfassung des Zugangs von Objekten, wie Personen oder Gegenständen, mit zumindest einem Referenzbild verglichen. Zu diesem Zweck ist es notwendig das zumindest eine Referenzbild in die Auswerteeinrichtung 6 zu laden. Im vorliegenden Beispiel wird dabei zumindest ein Referenzbild mit geschlossener Aufzugstür 5 und zumindest ein Referenzbild mit geöffneter Aufzugstür 5 geladen. Dadurch kann einerseits die Auswerteeinrichtung 6 alleine durch den Vergleich der Bilddaten mit den Referenzbildern detektieren, ob die Aufzugstür 5 geöffnet ist, sodass ein Zu- bzw. Abgang von Objekten zu erwarten ist, oder geschlossen ist. Desto mehr Referenzbilder zum Vergleich herangezogen werden, desto höher ist die Wahrscheinlichkeit ein Objekt korrekt erfassen zu können. Die Referenzbilder können dabei beispielsweise im Rahmen von einer oder mehreren Kalibrierungsfahrten von dem zumindest einen optischen Sensor 9 erfasst werden, wobei vorzugsweise in jedem Stockwerk ein Referenzbild mit geöffneter Aufzugstüre 5 erfasst wird. Mehrere Kalibrierungsfahrten können die Genauigkeit weiter erhöhen, wenn zu verschiedenen Tageszeiten Referenzbilder mit entsprechenden Lichtverhältnissen aufgenommen werden. Alternativ dazu ist es auch denkbar, dass das zumindest eine Referenzbild aus einer Datenbank importiert wird, beispielsweise vom Server 1.

Sobald das zumindest eine Referenzbild geladen ist, startet die Überwachung, wobei in der Auswerteeinrichtung 6 laufend die vom zumindest einen optischen Sensor 9 erfassten Bilddaten mit dem zumindest einen Referenzbild verglichen werden und parallel die in Ausschnitt II dargestellten Vorgänge ausgeführt werden: "Beobachten von Zu- und Abgängen", "Positionstracking", "Überwachen einer vordefinierten Zeitdauer" und "Bewegungstracking Person", wie in Figur 3 zu sehen ist. Wie in der Folge erläutert wird, handelt es sich bei dem Verfahren um eine vorteilhafte Kombination von Vorgängen, wobei jedoch nicht alle Vorgänge tatsächlich notwendig sind, um das erfindungsgemäße Verfahren durchzuführen.

Von besonderer Bedeutung ist die Erfassung von Zugängen von Objekten in den Überwachungsbereich und die Detektion von Objekten die den Überwachungsbereich verlassen. Wie bereits eingangs erwähnt finden Zugänge und Abgänge in der Regel dann statt, wenn die Aufzugstür 5 geöffnet ist. Ein solcher Zugang kann als regulärer Zugang bezeichnet werden. Es ist jedoch auch denkbar, dass ein unbekanntes Objekt zu einem späteren Zeitpunkt, also beispielsweise während der Fahrt oder in einem anderen Stockwerk, erkannt wird. Dies ist insbesondere dann der Fall, wenn das Objekt beim Durchqueren der Aufzugstüre 5 durch ein anderes Objekt verdeckt war und so nicht vom zumindest einen optischen Sensor 9 erfasst wurde. In diesem Fall kann von einem verdeckten Zugang gesprochen werden.

Gleichzeitig mit der Erfassung eines neuen Objekts, unabhängig davon ob ein regulärer oder ein verdeckter Zugang stattgefunden hat, wird einerseits ein Datenobjekt aktiviert, sowie zumindest ein Wiedererkennungsmerkmal des Objekts von der Auswerteeinrichtung 6 erfasst und im Datenobjekt in einem Datenspeicher zwecks Datenerfassung gespeichert. Das zumindest eine Wiedererkennungsmerkmal dient dabei der Identifikation eines Objekts unter mehreren Objekten im Überwachungsbereich, wobei das zumindest eine Wiedererkennungsmerkmal vorzugsweise laufend aktualisiert wird, solange sich das Objekt im Überwachungsbereich befindet und erfasst wird.

Um zu bestimmen ob es sich bei einem erfassten Objekt um eine Person oder einen Gegenstand handelt, wird eine Gesichtserkennung in der Auswerteeinrichtung 6 durchgeführt und ein entsprechender Identifikations-Eintrag im Datenobjekt aktiviert. Gleichermaßen kann der Identifikations-Eintrag auch Informationen zu einer Klassifizierung des Objekts erhalten, beispielsweise Mann, Frau, Kind oder eine bestimmte Klasse von Gegenständen, etwa um Gepäckstücke.

Mithilfe des Bildvergleichs und den nachfolgend beschriebenen Vorgängen wird jedes Objekt über seine gesamte Verweildauer im Überwachungsbereich überwacht. Detektiert die Auswerteeinrichtung 6, dass ein Objekt den Überwachungsbereich verlässt, stellt sie also den Abgang des Objekts fest, so wird das diesem Objekt zugeordnete Datenobjekt deaktiviert. Ein deaktiviertes - sprich nicht aktives - Datenobjekt im Datenspeicher bedeutet also, dass sich das zugeordnete Objekt nicht mehr in der Aufzugskabine 3 befindet. Unter Deaktivierung kann dabei auch die Löschung des Datenobjekts verstanden werden.

Der zweite parallel ablaufende Vorgang ist das Positionstracking, also die Erfassung und Speicherung von Positionsdaten der einzelnen Objekte in den jeweiligen Datenobjekten. Zu diesem Zweck umfasst der zumindest eine optische Sensor 9 neben einem herkömmlichen Bildsensor, etwa einer digitalen Videokamera, auch eine Tiefenkamera, welche räumliche Positionsdaten erfassen kann. Mithilfe der Tiefenkamera, welche beispielsweise einen Infrarot Laser Projektor und einen monochromatischen CMOS Sensor umfasst, kann ein dreidimensionales Bild des Überwachungsbereichs erstellt werden, in welchem die Objekte dreidimensional positioniert sind.

Ändert ein Objekt seine Position, so kann einer von drei Fällen eintreten: Im ersten Fall wird die Erfassung des Objekts durch die Positionsänderung nicht beeinflusst, sodass lediglich die Positionsdaten aktualisiert werden. Im zweiten Fall wird ein Objekt nicht mehr von dem zumindest einen optischen Sensor 9 erfasst, ohne dass jedoch der Abgang des Objekts aus dem Überwachungsbereich detektiert wurde. In anderen Worten ist das Objekt durch ein zweites Objekt verdeckt. Aus diesem Grund wird ein Verdeckungs-Eintrag im Datenobjekt des verdeckten Objekts aktiviert. Im dritten Fall wird ein Objekt wiedererfasst, welches zuvor verdeckt war. Entsprechend wird der Verdeckungs-Eintrag nach der Wiedererkennung wieder deaktiviert.

Wenngleich die Kombination von Positionstracking und Verdeckungserkennung sich positiv beeinflussen und aufgrund des Abgleichs mit anderen Objekten eine höhere Sicherheit aufweist, ist ein Erfassen der Positionsdaten nicht zwingend erforderlich, um einen Verdeckungs-Eintrag zu aktivieren bzw. zu deaktivieren. So ist es beispielsweise denkbar, dass der zumindest eine optische Sensor 9 das zumindest eine Wiedererkennungsmerkmal eines Objekts nicht mehr auffindet und aus diesem Grund den Verdeckungs-Eintrag aktiviert. Sobald die Objekte ihre Position wieder ändern, wird das zumindest eine Wiedererkennungsmerkmal wieder erfasst und daher der Verdeckungs-Eintrag des wiedererfassten Objekts deaktiviert.

Um zu verhindern, dass Datenobjekte mit aktivem Verdeckungs-Eintrag beliebig lange aktiv bleiben, auch wenn das entsprechende Objekt unter Umständen bereits den Überwachungsbereich verlassen hat, ohne dass dies detektiert wurde, wird für jedes Datenobjekt eine Maximaldauer definiert, beispielsweise 30 Minuten, nach welcher die Objektüberwachung beendet wird und das entsprechende Datenobjekt deaktiviert wird. Zusätzlich oder alternativ dazu können alle aktiven Datenobjekte deaktiviert werden, wenn ein leerer Überwachungsbereich detektiert wird.

Ein positiver Effekt der Erfassung und Kennzeichnung von verdeckten Objekten ist natürlich in der höheren Stabilität der Überwachung bei einer Mehrzahl an Objekten innerhalb des Überwachungsbereichs zu sehen.

Wie in dem in Figur 3b ersichtlichen Ausschnitt III dargestellt, ermöglicht die Erfassung und Kennzeichnung von verdeckten Objekten mittels des Verdeckungs-Eintrags auch die gezielte Auslösung einer Alarmierungsprozedur, wie in der Folge erläutert wird. Um festzustellen, ob ein Gegenstand in der Aufzugskabine 3 zurückgelassen wurde oder ob eine Person aus gesundheitlichen Gründen die Aufzugskabine 3 nicht mehr verlassen kann, etwa aufgrund von Ohnmacht, wird die Zeitdauer seit der Erfassung eines Objekts erfasst. Wenn diese Zeitdauer eine vordefinierte Zeitdauer überschreitet, so wird die Alarmierungsprozedur ausgelöst, um Sicherheits- oder Einsatzkräfte zu alarmieren. Würde nur die Zeit alleine erfasst werden, so würden häufig Fehlalarme ausgelöst werden, da verdeckte Objekte, welche verdeckt den Überwachungsbereich verlassen haben, jedes Mal nach dem Ablauf der vordefinierten Zeitdauer die Alarmierungsprozedur auslösen würden.

Um diesen Nachteil zu überwinden, müssen neben dem Ablauf der vordefinierten Zeitdauer zwei weitere Bedingungen erfüllt sein, um eine Alarmierungsprozedur auszulösen: Einerseits muss das Datenobjekt aktiv sein, es darf also nicht aufgrund eines der zuvor erläuterten Vorgänge deaktiviert sein, und andererseits darf das Datenobjekt keinen aktiven Verdeckungs-Eintrag aufweisen. So kann sichergestellt werden, dass eine Alarmierungsprozedur nur dann ausgelöst wird, wenn sich das betreffende Objekt tatsächlich noch in der Aufzugskabine 3 befindet. Ein über einen gewissen Zeitraum aktiver Verdeckungs-Eintrag schadet dem Verfahren nicht, denn selbst wenn der Verdeckungs-Eintrag erst nach Ablauf der vordefinierten Zeitspanne deaktiviert wird, wird die Alarmierungsprozedur sofort ausgelöst. Je nachdem ob es sich bei dem Objekt um eine Person oder einen Gegenstand handelt können unterschiedliche Alarmierungsprozeduren ausgelöst werden und/oder unterschiedlich lange vordefinierte Zeitdauern vorgesehen sein.

Die vordefinierte Zeitdauer kann dabei entweder fest definiert sein, beispielsweise 5 Minuten betragen. Vorteilhaft ist es jedoch, wenn die vordefinierte Zeitdauer an die Umgebungsbedingungen am Einsatzort der Aufzugskabine 3 angepasst ist, beispielsweise jener Zeitdauer entspricht, die die Aufzugskabine 3 für eine Fahrt von einem untersten zu einem obersten Stockwerk und retour benötigt. Weiters ist es vorteilhaft einen Aufschlagswert zu addieren, um die Aufenthalte in einem, mehreren oder allen Stockwerken zu berücksichtigen. Wenn die Auswerteeinrichtung 6 direkt oder indirekt erfasst in welchem Stockwerk sich die Aufzugskabine 3 befindet, so kann die Zeitdauer verkürzt werden, etwa bis zur zweiten Richtungsumkehr nach der Erfassung des Objekts.

Um die verschiedenen Vorgänge zu optimieren, ist nach der Beendigung der Alarmierungsprozedur eine Feedbackschleife vorgesehen, wobei entweder ein Fehlerfall gemeldet wird, wenn tatsächlich kein Notfall vorgelegen ist, oder ein Erfolgsfall gemeldet wird, wenn tatsächlich ein Notfall vorgelegen ist. Die der Auslösung der Alarmierungsprozedur zugrunde liegenden Parameter können zur Verbesserung des Verfahrens verwendet werden, um zukünftige Fehldetektionen zu vermeiden und die Wahrscheinlichkeit von ähnlichen Erfolgsfällen zu erhöhen.

Eine weitere optionale Möglichkeit zu Detektion eines Notfalls kann durch Überwachen der Bewegungen einer Person geschaffen werden. So kann die Alarmierungsprozedur auch vor Ablauf der vordefinierten Zeitdauer ausgelöst werden, wenn die Person über einen längeren Zeitraum nicht steht oder sich nicht mehr bewegt. Bei der Detektion der Bewegung kann der Umstand ausgenützt werden, dass eine Person die bei Bewusstsein ist unwillkürliche kleine Bewegungen ausführt, die detektierbar sind. Fehlen diese kleinen Bewegungen so kann von einer ohnmächtigen Person ausgegangen werden.

Schließlich kann die vordefinierte Zeitdauer auch aufgrund anderer detektierter Ereignisse unterbrochen werden, beispielsweise wenn sich eine Person im Überwachungsbereich befindet und sich die Beleuchtung der Aufzugskabine 3 verändert oder wenn die Aufzugstüre 5 über einen langen Zeitraum nicht geöffnet werden obwohl sich eine Person in der Aufzugskabine 3 befindet.

### BEZUGSZEICHENLISTE

- 1: Server
- 2: Kommunikationsnetzwerk
- 3: Aufzugskabine
- 4: Überwachungseinrichtung
- 5: Aufzugstür
- 6: Auswerteeinrichtung
- 7: Anzeigeeinrichtung
- 8: Sensor
- 9: optischer Sensor
- 10: Tragseil
- 11: Gegengewicht

## Patentansprüche

1. Verfahren zur Überwachung einer Aufzugskabine (3) mittels zumindest eines optischen Sensors (9),
wobei der zumindest eine optische Sensor (9) Bilddaten in einem Überwachungsbereich der Aufzugskabine (3) erfasst, wobei die erfassten Bilddaten über eine erste Datenverbindung an eine in der Aufzugskabine (3) angeordnete Auswerteeinrichtung (6) übermittelt werden,
**dadurch gekennzeichnet, dass**
in der Auswerteeinrichtung (6) die erfassten Bilddaten mit zumindest einem Referenzbild des Überwachungsbereichs verglichen werden, um folgende Schritte durchzuführen:
- Erfassen des Zugangs von Objekten in den Überwachungsbereich sowie zumindest eines Wiedererkennungsmerkmals für jedes erfasste Objekt, wobei ein Datenobjekt für jedes erfasste Objekt in einem Datenspeicher aktiviert wird und das zumindest eine Wiedererkennungsmerkmal im Datenobjekt gespeichert wird;
- Detektieren des Abgangs von Objekten aus dem Überwachungsbereich, wobei das dem abgegangenen Objekt zugeordnete Datenobjekt deaktiviert wird;
wobei
- ein Verdeckungs-Eintrag im Datenobjekt eines Objekts aktiviert wird, wenn das Objekt nicht mehr von dem zumindest einen optischen Sensor (9) erfasst wird, ohne dass der Abgang des Objekts detektiert wurde;
- der Verdeckungs-Eintrag im Datenobjekt eines Objekts deaktiviert wird, wenn das Objekt von dem zumindest einen optischen Sensor (9) wiedererfasst wird;
wobei eine Alarmierungsprozedur ausgelöst wird, wenn
- ein Datenobjekt in einer vordefinierten Zeitdauer nach seiner Aktivierung nicht deaktiviert wurde und das Datenobjekt keinen aktiven Verdeckungs-Eintrag aufweist.

2. Verfahren nach Anspruch 1, **dadurch gekennzeichnet, dass** in der Auswerteeinrichtung (6) folgender Schritt durchgeführt wird:
- Identifizieren ob es sich bei einem erfassten Objekt um einen Gegenstand oder um eine Person handelt, wobei im Datenobjekt ein entsprechender Identifikations-Eintrag aktiviert wird.

3. Verfahren nach Anspruch 2, **dadurch gekennzeichnet, dass** nach der Identifizierung eines Gegenstands und/oder einer Person eine Klassifizierung in verschiedene Gegenstands-Klassen oder Personen-Klassen erfolgt, wobei die Klassifizierung im Identifikations-Eintrag gespeichert wird.

4. Verfahren nach Anspruch 2 oder 3, **dadurch gekennzeichnet, dass** in Abhängigkeit des Identifikations-Eintrags unterschiedliche Alarmierungsprozeduren ausgelöst werden und/oder dass die vordefinierte Zeitdauer für jeden Identifikations-Eintrag unterschiedlich definiert ist.

5. Verfahren nach einem der Ansprüche 2 bis 4, **dadurch gekennzeichnet, dass** die vordefinierte Zeitdauer unterbrochen wird und die Alarmierungsprozedur ausgelöst wird, wenn zusätzlich zur Detektion der Anwesenheit von zumindest einer Person ohne aktiven Verdeckungs-Eintrag eine der folgenden Betriebssituationen detektiert wird:
- Veränderung der Lichtverhältnisse im Überwachungsbereich bei geschlossener Aufzugstüre (5) der Aufzugskabine (3);
- Keine Öffnung der Aufzugstüre (5) der Aufzugskabine (3) über eine vordefinierte Maximaldauer.

6. Verfahren nach einem der Ansprüche 1 bis 5, **dadurch gekennzeichnet, dass** der zumindest eine optische Sensor (9) eine Tiefenkamera umfasst und in der Auswerteeinrichtung (6) folgender Schritt durchgeführt wird:
- Erfassen von Positionsdaten der erfassten Objekte zur Bestimmung einer Position der Objekte innerhalb des Überwachungsbereichs, wobei zumindest die aktuellen Positionsdaten im Datenobjekt gespeichert werden;
wobei die Positionsdaten zur Verifizierung der Aktivierung und/oder der Deaktivierung der Verdeckungs-Einträge verwendet werden.

7. Verfahren nach einem der Ansprüche 1 bis 6, **dadurch gekennzeichnet, dass** zumindest zwei Referenzbilder vorgesehen sind, wobei zumindest ein erstes Referenzbild den Überwachungsbereich bei geöffneter Aufzugstür (5) der Aufzugskabine (3) und zumindest ein zweites Referenzbild den Überwachungsbereich bei geschlossener Aufzugstür (5) der Aufzugskabine (3) zeigt.

8. Verfahren nach einem der Ansprüche 1 bis 7, **dadurch gekennzeichnet, dass** die Auswerteeinrichtung (6) direkt oder indirekt erfasst, ob eine Aufzugstür (5) der Aufzugskabine (3) geöffnet oder geschlossen ist, wobei eine Detektion des Abgangs von Objekten nur dann erfolgt, wenn die Aufzugstür (5) der Aufzugskabine (3) geöffnet ist.

9. Verfahren nach einem der Ansprüche 1 bis 8, **dadurch gekennzeichnet, dass** das zumindest eine Referenzbild im Rahmen zumindest einer Kalibrierungsfahrt der Aufzugskabine (3) von dem zumindest einen optischen Sensor (9) erfasst wird und/oder dass das zumindest eine Referenzbild aus einer Datenbank importiert wird.

10. Verfahren nach einem der Ansprüche 1 bis 9, **dadurch gekennzeichnet, dass** die vordefinierte Zeitdauer jener Zeit entspricht, die die Aufzugskabine (3) für eine Fahrt von einem untersten bis zu einem obersten Stockwerk benötigt, vorzugsweise zuzüglich eines Aufschlagwertes für einen Aufenthalt der Aufzugskabine (3) in einem Stockwerk oder in mehreren Stockwerken.

11. Verfahren nach einem der Ansprüche 1 bis 9, **dadurch gekennzeichnet, dass** die Auswerteeinrichtung (6) direkt oder indirekt erfasst in welchem Stockwerk sich die Aufzugskabine (3) befindet und die vordefinierte Zeitdauer jener Zeit entspricht, die zwischen der Erstellung des Datenobjekts und der zweiten Richtungsumkehr der Aufzugskabine (3) vergeht oder die vordefinierte Zeitdauer jener Zeit entspricht, die zwischen der Erstellung des Datenobjekts und der Vorbeifahrt der Aufzugskabine (3) an jenem Stockwerk vergeht, in welchem das Datenobjekt erstellt wurde.

12. Verfahren nach einem der Ansprüche 1 bis 11, **dadurch gekennzeichnet, dass** am Ende der Alarmierungsprozedur überprüft wird, ob ein die Auslösung der Alarmierungsprozedur rechtfertigendes Ereignis stattgefunden hat, wobei Parameterwerte die der Auslösung der Alarmierungsprozedur zu Grunde liegen gemeinsam mit dem Überprüfungsergebnis gespeichert werden, um zukünftige Fehldetektionen zu vermeiden.

13. Verfahren nach einem der Ansprüche 1 bis 12, **dadurch gekennzeichnet, dass** alle Datenobjekte deaktiviert werden, wenn kein Objekt im Überwachungsbereich erfasst wird und/oder dass ein Datenobjekt mit aktivem Verdeckungs-Eintrag nach Ablauf einer vordefinierten Maximaldauer deaktiviert wird.

14. Verfahren nach einem der Ansprüche 1 bis 13, **dadurch gekennzeichnet, dass** anhand des zumindest einen Referenzbilds der Überwachungsbereich in Abhängigkeit eines Innenraums und/oder eines Vorbereichs der Aufzugskabine (3) festgelegt wird.

15. Überwachungseinrichtung (4) für eine Aufzugskabine (3) mit einer Auswerteeinrichtung (6) und zumindest einem optischen Sensor (9) zur Erfassung von Bilddaten, sowie vorzugsweise einer Kommunikationseinrichtung zur Kommunikation mit zumindest einem Server (1) über ein erstes Kommunikationsnetzwerk (2), **dadurch gekennzeichnet, dass** die Auswerteeinrichtung (6) eingerichtet ist, um ein Verfahren nach einem der Ansprüche 1 bis 14 durchzuführen.

## Claims

1. Method for monitoring an elevator car (3) by means of at least one optical sensor (9),
wherein the at least one optical sensor (9) detects image data in a monitoring region of the elevator car (3), wherein the detected image data are transmitted by way of a first data connection to an evaluation device (6) arranged in the elevator car (3),
**characterized in that**
in the evaluation device (6) the detected image data are compared with at least one reference image of the monitoring region in order to carry out the following steps:
- detecting the entrance of objects into the monitoring region and at least one recognition feature for each detected object, wherein a data object for each detected object is activated in a data memory and the at least one recognition feature is stored in the data object;
- detecting the departure of objects from the monitoring region, wherein the data object associated with the departed object is deactivated;
wherein
- a concealment entry in the data object of an object is activated when the object is no longer detected by the at least one optical sensor (9) without the departure of the object having been detected;
- the concealment entry in the data object of an object is deactivated when the object is detected again by the at least one optical sensor (9);
wherein an alarming procedure is triggered when
- a data object has not been deactivated within a predefined period of time after its activation and the data object does not have an active concealment entry.

2. Method according to claim 1, **characterized in that** the following step is carried out in the evaluation device (6):
- identifying whether a detected object is an object or a person, wherein a corresponding identification entry in the data object is activated.

3. Method according to claim 2, **characterized in that** after the identification of an object and/or a person, a classification into different object classes or person classes takes place, wherein the classification is stored in the identification entry.

4. Method according to claim 2 or 3, **characterized in that** different alarming procedures are triggered depending on the identification entry and/or **in that** the predefined time duration is defined differently for each identification entry.

5. Method according to one of claims 2 to 4, **characterized in that** the predefined time period is interrupted and the alarming procedure is triggered if, in addition to detecting the presence of at least one person without active concealment entry, one of the following operating situations is detected:
- change of light conditions in the monitoring region when an elevator door (5) of the elevator car (3) is closed;
- no opening of the elevator door (5) of the elevator car (3) for a predefined maximum duration.

6. Method according to one of claims 1 to 5, **characterized in that** the at least one optical sensor (9) comprises a depth camera and the following step is carried out in the evaluation device (6):
- detecting position data of the detected objects for determining a position of the objects within the monitoring region, wherein at least the current position data is stored in the data object;
wherein the position data is used to verify the activation and/or deactivation of the concealment entries.

7. Method according to one of claims 1 to 6, **characterized in that** at least two reference images are provided, wherein at least a first reference image shows the monitoring region with an elevator door (5) of the elevator car (3) open and at least a second reference image shows the monitoring region with the elevator door (5) of the elevator car (3) closed.

8. Method according to one of claims 1 to 7, **characterized in that** the evaluation device (6) detects directly or indirectly whether an elevator door (5) of the elevator car (3) is open or closed, wherein detection of the departure of objects only take place if the elevator door (5) of the elevator car (3) is open.

9. Method according to one of claims 1 to 8, **characterized in that** the at least one reference image is acquired by the at least one optical sensor (9) in the course of at least one calibration travel of the elevator car (3) and/or **in that** the at least one reference image is imported from a database.

10. Method according to one of claims 1 to 9, **characterized in that** the predefined time duration corresponds to the time required by the elevator car (3) for a trip from a lowest to an uppermost floor, preferably plus a markup value for a stay of the elevator car (3) at one floor or at several floors.

11. Method according to one of claims 1 to 9, **characterized in that** the evaluation device (6) directly or indirectly detects at which floor the elevator car (3) is located and the predefined time duration corresponds to that time which elapses between the creation of the data object and the second reversal of direction of the elevator car (3) or the predefined time duration corresponds to that time which elapses between the creation of the data object and the passage of the elevator car (3) past that floor at which the data object was created.

12. Method according to one of claims 1 to 11, **characterized in that** at the end of the alarming procedure it is checked whether an event justifying the triggering of the alarming procedure has occurred, wherein parameter values underlying the triggering of the alarming procedure are stored together with the check result in order to avoid future false detections.

13. Method according to one of claims 1 to 12, **characterized in that** all data objects are deactivated if no object is detected in the monitoring region and/or **in that** a data object with an active concealment entry is deactivated after a predefined maximum duration has elapsed.

14. Method according to one of claims 1 to 13, **characterized in that** the at least one reference image is used to determine the monitoring region as a function of an interior and/or a front area of the elevator car (3).

15. Monitoring device (4) for an elevator car (3), comprising an evaluation device (6) and at least one optical sensor (9) for acquiring image data, and preferably a communication device for communicating with at least one server (1) via a first communication network (2), **characterized in that** the evaluation device (6) is adapted to carry out a method according to one of claims 1 to 14.

## Revendications

1. Procédé de surveillance d'une cabine d'ascenseur (3) au moyen d'au moins un capteur optique (9),
l'au moins un capteur optique (9) détectant des données d'image dans une zone de surveillance de la cabine d'ascenseur (3), les données d'image détectées étant transmises par une première liaison de données à un dispositif d'évaluation (6) disposé dans la cabine d'ascenseur (3),
**caractérisé en ce que**
dans le dispositif d'évaluation (6), les données d'image détectées sont comparées avec au moins une image de référence de la zone de surveillance afin d'effectuer les étapes suivantes :
- détecter l'accès d'objets à la zone de surveillance ainsi qu'au moins une caractéristique de reconnaissance pour chaque objet détecté, dans lequel un objet de données est activé dans une mémoire de données pour chaque objet détecté et l'au moins une caractéristique de reconnaissance est enregistrée dans l'objet de données ;
- capter la sortie d'objets de la zone de surveillance, l'objet de données associé à l'objet parti étant désactivé ;
dans lequel
- une entrée d'occultation dans l'objet de données d'un objet est activée lorsque l'objet n'est plus détecté par l'au moins un capteur optique (9) sans que la sortie de l'objet ait été captée ;
- l'entrée d'occultation dans l'objet de données d'un objet est désactivée lorsque l'objet est à nouveau détecté par l'au moins un capteur optique (9);
une procédure d'alerte étant déclenchée lorsqu'
- un objet de données n'a pas été désactivé après son activation au cours d'une période de temps prédéfinie, et l'objet de données ne présente aucune entrée d'occultation active.

2. Procédé selon la revendication 1, **caractérisé en ce que** l'étape suivante est effectuée dans le dispositif d'évaluation (6) :
- identifier si un objet détecté est un objet ou une personne, une entrée d'identification correspondante étant activée dans l'objet de données.

3. Procédé selon la revendication 2, **caractérisé en ce qu'**après l'identification d'un objet et/ou d'une personne, une classification en différentes classes d'objets ou classes de personnes est effectuée, la classification étant enregistrée dans l'entrée d'identification.

4. Procédé selon la revendication 2 ou 3, **caractérisé en ce que** des procédures d'alerte différentes sont déclenchées en fonction de l'entrée d'identification et/ou **en ce que** la période de temps prédéfinie est définie différemment pour chaque entrée d'identification.

5. Procédé selon l'une quelconque des revendications 2 à 4, **caractérisé en ce que** la période de temps prédéfinie est interrompue et la procédure d'alerte est déclenchée si, en plus du captage de la présence d'au moins une personne sans entrée d'occultation active, l'une des situations de fonctionnement suivantes est captée :
- modification des conditions d'éclairage dans la zone de surveillance lorsque la porte d'ascenseur (5) de la cabine d'ascenseur (3) est fermée ;
- pas d'ouverture de la porte d'ascenseur (5) de la cabine d'ascenseur (3) pendant une durée maximale prédéfinie.

6. Procédé selon l'une quelconque des revendications 1 à 5, **caractérisé en ce que** l'au moins un capteur optique (9) comprend une caméra de profondeur et **en ce que** l'étape suivante est effectuée dans le dispositif d'évaluation (6) :
- détection de données de position des objets détectés pour déterminer une position des objets à l'intérieur de la zone de surveillance, au moins les données de position actuelles étant enregistrées dans l'objet de données ;
les données de position étant utilisées pour vérifier l'activation et/ou la désactivation des entrées d'occultation.

7. Procédé selon l'une quelconque des revendications 1 à 6, **caractérisé en ce qu'**au moins deux images de référence sont prévues, au moins une première image de référence montrant la zone de surveillance lorsque la porte d'ascenseur (5) de la cabine d'ascenseur (3) est ouverte et au moins une deuxième image de référence montrant la zone de surveillance lorsque la porte d'ascenseur (5) de la cabine d'ascenseur (3) est fermée.

8. Procédé selon l'une quelconque des revendications 1 à 7, **caractérisé en ce que** le dispositif d'évaluation (6) détecte directement ou indirectement si une porte d'ascenseur (5) de la cabine d'ascenseur (3) est ouverte ou fermée, un captage de la sortie d'objets n'étant effectué que si la porte d'ascenseur (5) de la cabine d'ascenseur (3) est ouverte.

9. Procédé selon l'une quelconque des revendications 1 à 8, **caractérisé en ce que** l'au moins une image de référence est détectée par l'au moins un capteur optique (9) dans le cadre d'au moins une course de calibrage de la cabine d'ascenseur (3) et/ou **en ce que** l'au moins une image de référence est importée à partir d'une base de données.

10. Procédé selon l'une quelconque des revendications 1 à 9, **caractérisé en ce que** la période de temps prédéfinie correspond au temps nécessaire à la cabine d'ascenseur (3) pour se déplacer d'un étage le plus bas à un étage le plus haut, de préférence augmenté d'une valeur de majoration pour une course de la cabine d'ascenseur (3) à un étage ou à plusieurs étages.

11. Procédé selon l'une quelconque des revendications 1 à 9, **caractérisé en ce que** le dispositif d'évaluation (6) détecte directement ou indirectement à quel étage se trouve la cabine d'ascenseur (3) et la période de temps prédéfinie correspond au temps qui s'écoule entre la création de l'objet de données et le deuxième changement de direction de la cabine d'ascenseur (3) ou la période de temps prédéfinie correspond au temps qui s'écoule entre la création de l'objet de données et le passage de la cabine d'ascenseur (3) à l'étage où l'objet de données a été créé.

12. Procédé selon l'une quelconque des revendications 1 à 11, **caractérisé en ce qu'à** la fin de la procédure d'alerte, il est vérifié si un événement justifiant le déclenchement de la procédure d'alerte a eu lieu, les valeurs de paramètres qui sont à la base du déclenchement de la procédure d'alerte étant enregistrées en même temps que le résultat de la vérification, afin d'éviter de futurs faux captages.

13. Procédé selon l'une quelconque des revendications 1 à 12, **caractérisé en ce que** tous les objets de données sont désactivés lorsqu'aucun objet n'est détecté dans la zone de surveillance et/ou **en ce qu'**un objet de données avec une entrée d'occultation active est désactivé après l'écoulement d'une durée maximale prédéfinie.

14. Procédé selon l'une quelconque des revendications 1 à 13, **caractérisé en ce qu'à** l'aide de l'au moins une image de référence, la zone de surveillance est déterminée en fonction d'un espace intérieur et/ou d'une zone avant de la cabine d'ascenseur (3).

15. Dispositif de surveillance (4) destiné à une cabine d'ascenseur (3) avec un dispositif d'évaluation (6) et au moins un capteur optique (9) pour la détection de données d'image, ainsi que, de préférence, un dispositif de communication pour la communication avec au moins un serveur (1) par l'intermédiaire d'un premier réseau de communication (2), **caractérisé en ce que** le dispositif d'évaluation (6) est conçu pour effectuer un procédé selon l'une quelconque des revendications 1 à 14.
